(19)

Europäisches
Patentamt
European
Patent Office
Office européen
des brevets

(11) **EP 4 637 204 A1**

(12) **EUROPEAN PATENT APPLICATION**
published in accordance with Art. 153(4) EPC

(43) Date of publication:
 **22.10.2025 Bulletin 2025/43**

(21) Application number: **23910572.9**

(22) Date of filing: **26.12.2023**

(51) International Patent Classification (IPC):
 *H04W 24/08* (2009.01)

(52) Cooperative Patent Classification (CPC):
 **H04L 5/00; H04L 27/26; H04W 24/08;**
 **H04W 72/0446; H04W 72/0453; H04W 72/21;**
 **H04W 72/23**

(86) International application number:
 **PCT/CN2023/141827**

(87) International publication number:
 **WO 2024/140647 (04.07.2024 Gazette 2024/27)**

(84) Designated Contracting States:
 **AL AT BE BG CH CY CZ DE DK EE ES FI FR GB**
 **GR HR HU IE IS IT LI LT LU LV MC ME MK MT NL**
 **NO PL PT RO RS SE SI SK SM TR**
 Designated Extension States:
 **BA**
 Designated Validation States:
 **KH MA MD TN**

(30) Priority: **30.12.2022 CN 202211730786**

(71) Applicant: **Huawei Technologies Co., Ltd.**
 **Shenzhen, Guangdong 518129 (CN)**

(72) Inventors:
 • **LIU, Xianda**
  **Shenzhen, Guangdong 518129 (CN)**

 • **DONG, Changzhao**
  **Shenzhen, Guangdong 518129 (CN)**
 • **CAI, Shijie**
  **Shenzhen, Guangdong 518129 (CN)**
 • **GAO, Xiang**
  **Shenzhen, Guangdong 518129 (CN)**
 • **LIU, Kunpeng**
  **Shenzhen, Guangdong 518129 (CN)**

(74) Representative: **Gill Jennings & Every LLP**
 **The Broadgate Tower**
 **20 Primrose Street**
 **London EC2A 2ES (GB)**

(54) **MEASUREMENT METHOD, APPARATUS, AND SYSTEM**

(57) This application provides a measurement method, an apparatus, and a system. In the measurement method, a part of resources on which no data is carried are reserved in a shared channel, and a DMRS is not carried on the part of resources. The part of resources may be dedicated to channel measurement, to avoid impact of a signal of another device on the channel measurement, and improve accuracy of the channel measurement.

FIG. 6

## Description

This application claims priority to Chinese Patent Application No. 202211730786.3, filed with the China National Intellectual Property Administration on December 30, 2022 and entitled "MEASUREMENT METHOD, APPARATUS, AND SYSTEM", which is incorporated herein by reference in its entirety.

## TECHNICAL FIELD

This application relates to the communication field, and in particular, to a measurement method, an apparatus, and a system.

## BACKGROUND

Interference measurement plays an important role in a communication procedure. For example, a terminal device needs to perform data demodulation based on interference information. However, in some current communication scenarios, for example, a neighboring cell interference measurement scenario, there is a problem that an interference signal to a data signal differs greatly from an interference signal to a demodulation reference signal (Dedicated demodulation reference signal, DMRS). This causes an inaccurate interference measurement result, and affects communication quality. Therefore, how to improve accuracy of interference measurement is an urgent problem to be resolved.

## SUMMARY

This application provides a measurement method, an apparatus, and a system. The measurement method can improve measurement accuracy, to improve communication quality.

According to a first aspect, a measurement method is provided. The method may be performed by a terminal device, or may be performed by a chip or a circuit used for the terminal device. This is not limited in this application. For ease of description, an example in which the method is performed by the terminal device is used below for description.

The method includes: receiving indication information of a first resource, where the first resource includes a second resource, a third resource, and a fourth resource, the second resource is used for transmission of first data, the third resource is not used for transmission of the first data, transmission of a demodulation reference signal DMRS corresponding to the first data is performed on the fourth resource, and a time domain resource corresponding to the third resource is different from a time domain resource included in the fourth resource; and determining a first measurement result based on the third resource.

The first measurement result may be a result of interference measurement between different cells (cells).

Optionally, that the fourth resource is different from the third resource may be understood as that the time domain resource corresponding to the third resource is different from the time domain resource corresponding to the fourth resource, or a frequency domain resource corresponding to the third resource is different from a frequency domain resource corresponding to the fourth resource, or a time-frequency resource corresponding to the third resource is different from a time-frequency resource corresponding to the fourth resource. This is not limited in this application.

It should be understood that, the indication information of the first resource may also be received. The first resource includes the second resource, and may further include the third resource and the fourth resource. The indication information may be PDSCH time-frequency resource allocation information in DCI.

In the method, a part of resources (namely, the third resource) on which no data is carried are reserved, and a DMRS is not carried on the part of resources. In other words, the part of resources may be dedicated to channel measurement, to avoid impact of a signal of another device or the like on the channel measurement, and improve accuracy of the channel measurement.

With reference to the first aspect, in some implementations of the first aspect, the first data may be received on the second resource based on the first measurement result.

With reference to the first aspect, in some implementations of the first aspect, rate matching corresponding to the first data is performed on the first resource, and the third resource belongs to a time-frequency resource corresponding to a first shared channel.

Alternatively, the third resource performs rate matching on the first data.

With reference to the first aspect, in some implementations of the first aspect, the first shared channel corresponds to a first cell.

It should be understood that, the first shared channel may be configured by a network device for the first cell, and the first cell is a cell in which the terminal device is located, or the first cell is a serving cell of the terminal device.

It should be further understood that, different cells may correspond to different shared channels.

With reference to the first aspect, in some implementations of the first aspect, the DMRS corresponding to the first data is received on the fourth resource, where the DMRS is associated with a second measurement result, and the second measurement result is used for receiving of the first shared channel.

The second measurement result may be a result of interference measurement between different devices in a cell (cell). For example, the cell includes a plurality of UEs, and the second measurement result may be a result of interference measurement between different UEs. Alternatively, the second measurement result is interference between data flows corresponding to ports in the cell, for example, interference caused by a data flow corresponding to another port that is simultaneously scheduled in the cell to a data flow corresponding to a port of a first terminal device (a serving UE).

In this manner, transmission is performed on the DMRS on a resource (namely, the fourth resource) different from the third resource, and the DMRS may be used to determine the second measurement result. In other words, the first measurement result and the second measurement result are determined by using different resources. For example, the fourth resource and the third resource correspond to different OFDM symbols. Both intra-cell interference and inter-cell interference may be measured by using a dedicated resource, to avoid possible impact of intra-cell interference measurement on inter-cell interference measurement, and further improve accuracy of the channel measurement.

In other words, the first measurement result and the second measurement result are combined to form a total interference measurement result, and the total interference measurement result may be used for data receiving.

With reference to the first aspect, in some implementations of the first aspect, a first DMRS is associated with an interfering DMRS port, the first DMRS corresponds to the first shared channel, the first DMRS belongs to the DMRS, and the second measurement result is associated with the interfering DMRS port.

In other words, the interfering DMRS port may be determined by using the first DMRS, and then the second measurement result is determined by using the interfering DMRS port. For example, a first DMRS port number is determined, an interfering DMRS port number is determined based on the first DMRS port number, and the second measurement result is determined based on a time-frequency resource and a sequence that correspond to the interfering DMRS number.

The first DMRS may be used for data channel estimation of the first shared channel.

With reference to the first aspect, in some implementations of the first aspect, in a resource block group RBG, the third resource corresponds to N OFDM symbols in time domain, where N is a positive integer greater than or equal to 1; and the third resource corresponds to M subcarriers in frequency domain, where M is a positive integer greater than or equal to 1.

With reference to the first aspect, in some implementations of the first aspect, when N is greater than or equal to 2, the N OFDM symbols include a first OFDM symbol and a second OFDM symbol, a difference between indexes that respectively correspond to the first OFDM symbol and the second OFDM symbol in the third resource is 1, there is an interval between the first OFDM symbol and the second OFDM symbol, and the interval includes at least one OFDM symbol.

In other words, when N is greater than or equal to 2, the N OFDM symbols include a first OFDM symbol and a second OFDM symbol, an index of the first OFDM symbol in the third resource is L, a corresponding index of the second OFDM symbol in the third resource is L+1, there is an interval between the first OFDM symbol and the second OFDM symbol, and the interval includes at least one OFDM symbol.

It should be understood that, a number of OFDM symbols occupied by the third resource in time domain and a number of subcarriers occupied by the third resource in frequency domain are not limited in this application.

It should be further understood that, the time domain resource corresponding to the third resource may be distributed at an interval, or there is an interval between units corresponding to the third resource in time domain. It should be understood that, the interval may be one OFDM symbol, or may be a plurality of OFDM symbols. This is not limited in this application.

With reference to the first aspect, in some implementations of the first aspect, a symbol index corresponding to a 1st OFDM symbol in the N OFDM symbols is X+1, and X is an index of a last symbol corresponding to a front-load DMRS.

Alternatively, a 1st OFDM symbol in the N OFDM symbols is adjacent to a last symbol of a front-load DMRS.

With reference to the first aspect, in some implementations of the first aspect, when the front-load DMRS includes one symbol, a symbol index is X, and the 1st symbol in the N symbols corresponds to the symbol index X+1; or when the front-load DMRS includes two symbols, symbol indexes are respectively Y and Y+1, and the 1st symbol in the N symbols corresponds to a symbol index Y+2.

In this manner, the 1st OFDM symbol of the third resource is adjacent to the front-load DMRS, so that a measurement delay can be shortened, and measurement efficiency can be improved.

With reference to the first aspect, in some implementations of the first aspect, each of the N symbols follows a symbol corresponding to one front-load DMRS, an index of any symbol of the N symbols is n+1, and n is an index of a last symbol corresponding to a front-load DMRS that is closest to the symbol.

With reference to the first aspect, in some implementations of the first aspect, the third resource further includes a third OFDM symbol, indexes corresponding to the first OFDM symbol, the second OFDM symbol, and the third OFDM symbol in the third resource are in ascending order, there is a first interval between the first OFDM symbol and the second OFDM symbol, there is a second interval between the second OFDM symbol and the third OFDM, and a number of OFDM symbols included in the first interval is the same as a number of OFDM symbols included in the second interval.

In other words, the third resource further includes a third OFDM symbol, the index of the first OFDM symbol in the third resource is L, the index of the second OFDM symbol in the third resource is L+1, a corresponding index of the third OFDM symbol in the third resource is L+2, there is a first interval between the first OFDM symbol and the second OFDM symbol, there is a second interval between the second OFDM symbol and the third OFDM, and a number of OFDM symbols included in the first interval is the same as a number of OFDM symbols included in the second interval.

In this manner, the third resource is distributed at an equal interval in time domain.

It should be understood that, that the third resource is distributed at an equal interval is merely used as an example of a distribution manner of the third resource in time domain. This application is not limited thereto. For example, the interval between the first OFDM symbol and the second OFDM symbol may be different from the interval between the second OFDM symbol and the third OFDM symbol.

With reference to the first aspect, in some implementations of the first aspect, the N OFDM symbols and the M subcarriers that correspond to the third resource are associated with at least one of a number of OFDM symbols occupied by the first shared channel, a number of OFDM symbols occupied by the first DMRS, a modulation and coding scheme MCS corresponding to the first shared channel, or a scheduled bandwidth or a number of RBs that corresponds to the first shared channel, and the first DMRS belongs to the DMRS corresponding to the first data.

With reference to the first aspect, in some implementations of the first aspect, the third resource is further associated with a number of cells included in a cell set, and the first cell belongs to the cell set.

With reference to the first aspect, in some implementations of the first aspect, a number of OFDM symbols that corresponds to the third resource in time domain is determined based on the number of OFDM symbols occupied by the first shared channel, the MCS corresponding to the first shared channel, and/or the number of OFDM symbols occupied by the DMRS.

With reference to the first aspect, in some implementations of the first aspect, the cell set includes at least one cell, the at least one cell is in one-to-one correspondence with at least one frequency domain resource offset and/or at least one time domain resource index offset, the frequency domain resource offset is an offset of a frequency domain resource of the third resource relative to an index of a $1^{st}$ subcarrier of the first resource, and the time domain resource offset is an offset of the time domain resource of the third resource relative to an index of a $1^{st}$ OFDM symbol of the first resource.

With reference to the first aspect, in some implementations of the first aspect, a number of subcarriers that corresponds to the third resource in frequency domain is determined based on the number of cells included in the cell set, the MCS corresponding to the first shared channel, and/or the scheduled bandwidth or the number of RBs that corresponds to the first shared channel.

With reference to the first aspect, in some implementations of the first aspect, downlink control information DCI is received, where the DCI indicates the third resource; and the third resource is obtained based on the DCI.

In other words, the third resource may be indicated. For example, the network device sends the downlink control information to the terminal device, where the downlink control information indicates the third resource. For example, a position of the third resource on the first shared channel may be indicated.

It should be understood that, the third resource may also be predefined. This is not limited in this application.

With reference to the first aspect, in some implementations of the first aspect, the DCI indicates a first reference signal resource type, the first reference signal resource type corresponds to a first pattern, and the first pattern includes position information of the third resource on the first shared channel, or the DCI indicates the first pattern.

Alternatively, the DCI indicates a first reference signal type, the first reference signal type corresponds to at least one first pattern, the first pattern includes position information of the third resource in the first resource, the first reference signal type belongs to at least one reference signal type, and each of the at least one reference signal type corresponds to at least one first pattern.

With reference to the first aspect, in some implementations of the first aspect, the first pattern belongs to at least one pattern, the at least one pattern is in one-to-one correspondence with at least one cell, the first pattern corresponds to the first cell, and the first cell belongs to the at least one cell.

In this manner, each cell corresponds to one pattern, that is, each cell may correspond to a different third resource. Different measurement resources are separately allocated to a to-be-measured cell, to avoid possible collision between measurement resources of different cells, so that interference between cells can be further avoided, and measurement accuracy is further improved.

With reference to the first aspect, in some implementations of the first aspect, the DCI indicates a first relationship, the first relationship is a relationship between the third resource and at least one of the number of OFDM symbols occupied by the first shared channel, the number of OFDM symbols occupied by the DMRS, the number of cells included in the cell set, the MCS corresponding to the first shared channel, the scheduled bandwidth or the number of physical resource blocks RBs that corresponds to the first shared channel, or the MCS corresponding to the first shared channel, and the first cell belongs to the cell set.

In this manner, the downlink control information indicates a relationship between a specific parameter and the first cell, and the terminal device may determine, by using the foregoing parameter, a third resource corresponding to the first cell.

Optionally, the relationship may be a correspondence, or may be a formula for determining the third resource based on the foregoing parameter. This is not limited in this application.

With reference to the first aspect, in some implementations of the first aspect, the DCI indicates an index of a first port.

The index of the first port corresponds to a first reference signal resource type, and the first reference signal resource type corresponds to the first relationship, or the index of the first port corresponds to the first relationship.

Alternatively, the index of the first port corresponds to a first reference signal type, the first reference signal type corresponds to the first relationship, the first reference signal type belongs to at least one reference signal type, and each of the at least one reference signal type corresponds to at least one first relationship.

With reference to the first aspect, in some implementations of the first aspect, the first port belongs to at least one port, the first relationship belongs to at least one relationship, and the at least one port is in one-to-one correspondence with the at least one relationship.

In this manner, the foregoing relationship may correspond to the port. When indicating the third resource to the terminal device, the network device may indicate an index of a port. The terminal device determines the third resource based on the index of the port and a correspondence between the index of the port and the foregoing relationship, so that indication overheads can be further reduced.

With reference to the first aspect, in some implementations of the first aspect, the DCI further indicates the first cell.

With reference to the first aspect, in some implementations of the first aspect, the DCI corresponds to a first index, the first index corresponds to the first cell, and the first index belongs to a control resource set index (coreset pool index).

With reference to the first aspect, in some implementations of the first aspect, the first measurement result is an interference signal reception assumption of a second cell, the second cell belongs to the cell set, and the second cell is different from the first cell.

It should be understood that, the second cell may be a neighboring cell of the first cell.

According to a second aspect, a measurement method is provided. The method may be performed by a network device, or may be performed by a chip or a circuit used for the network device. This is not limited in this application. For ease of description, an example in which the method is performed by the network device is used below for description.

The method includes: determining a first resource; and sending indication information of the first resource, where the first resource includes a second resource, a third resource, and a fourth resource, the second resource is used for transmission of first data, the third resource is not used for transmission of the first data, transmission of a demodulation reference signal DMRS corresponding to the first data is performed on the fourth resource, and a time domain resource corresponding to the third resource is different from a time domain resource included in the fourth resource.

With reference to the second aspect, in some implementations of the second aspect, the first data may be sent on the second resource based on a first measurement result.

With reference to the second aspect, in some implementations of the second aspect, rate matching corresponding to the first data is performed on the first resource, and the third resource belongs to a time-frequency resource corresponding to a first shared channel.

With reference to the second aspect, in some implementations of the second aspect, the first shared channel corresponds to a first cell.

With reference to the second aspect, in some implementations of the second aspect, the DMRS corresponding to the first data is received on the fourth resource, where the DMRS is associated with a second measurement result, and the second measurement result may be used for receiving of the first shared channel.

With reference to the second aspect, in some implementations of the second aspect, a first DMRS is associated with an interfering DMRS port, the first DMRS is carried on the first shared channel, the first DMRS belongs to the DMRS corresponding to the first data, and the second measurement result is associated with the interfering DMRS port.

With reference to the second aspect, in some implementations of the second aspect, in a resource block group RBG, the third resource corresponds to N OFDM symbols in time domain, where N is a positive integer greater than or equal to 1; and the third resource corresponds to M subcarriers in frequency domain, where M is a positive integer greater than or equal to 1.

With reference to the second aspect, in some implementations of the second aspect, when N is greater than or equal to 2, the N OFDM symbols include a first OFDM symbol and a second OFDM symbol, a difference between indexes that respectively correspond to the first OFDM symbol and the second OFDM symbol in the third resource is 1, there is an interval between the first OFDM symbol and the second OFDM symbol, and the interval includes at least one OFDM symbol.

Alternatively, when N is greater than or equal to 2, the N OFDM symbols include a first OFDM symbol and a second OFDM symbol, an index of the first OFDM symbol in the third resource is L, a corresponding index of the second OFDM symbol in the third resource is L+1, there is an interval between the first OFDM symbol and the second OFDM symbol, and the interval includes at least one OFDM symbol.

With reference to the second aspect, in some implementations of the second aspect, a symbol index corresponding to a 1st OFDM symbol in the N OFDM symbols is X+1, and X is an index of a last symbol corresponding to a front-load DMRS.

With reference to the second aspect, in some implementations of the first aspect, when the front-load DMRS includes one symbol, a symbol index is X, and the 1st symbol in the N symbols corresponds to the symbol index X+1; or when the front-load DMRS includes two symbols, symbol indexes are respectively Y and Y+1, and the 1st symbol in the N symbols corresponds to a symbol index Y+2.

With reference to the second aspect, in some implementations of the first aspect, each of the N symbols follows a symbol corresponding to one front-load DMRS, an index of any symbol of the N symbols is n+1, and n is an index of a last symbol corresponding to a front-load DMRS that is closest to the symbol.

With reference to the second aspect, in some implementations of the second aspect, the third resource further includes a third OFDM symbol, indexes corresponding to the first OFDM symbol, the second OFDM symbol, and the third OFDM symbol in the third resource are in ascending order, there is a first interval between the first OFDM symbol and the second OFDM symbol, there is a second interval between the second OFDM symbol and the third OFDM, and a number of OFDM symbols included in the first interval is the same as a number of OFDM symbols included in the second interval.

Alternatively, the third resource further includes a third OFDM symbol, the index of the first OFDM symbol in the third resource is L, the index of the second OFDM symbol in the third resource is L+1, a corresponding index of the third OFDM symbol in the third resource is L+2, there is a first interval between the first OFDM symbol and the second OFDM symbol, there is a second interval between the second OFDM symbol and the third OFDM, and a number of OFDM symbols included in the first interval is the same as a number of OFDM symbols included in the second interval.

With reference to the second aspect, in some implementations of the second aspect, the determining the third resource includes: determining, based on at least one of a number of OFDM symbols occupied by the first shared channel, a number of OFDM symbols occupied by the DMRS, an MCS corresponding to the first shared channel, or a scheduled bandwidth or a number of RBs that corresponds to the first shared channel, the N OFDM symbols and the M subcarriers that correspond to the third resource.

With reference to the second aspect, in some implementations of the second aspect, the determining the third resource further includes: determining the third resource based on a number of cells included in a cell set, where the first cell belongs to the cell set.

With reference to the second aspect, in some implementations of the second aspect, the cell set includes at least one cell, the at least one cell is in one-to-one correspondence with at least one frequency domain resource offset and/or at least one time domain resource index offset, the frequency domain resource offset is an offset of a frequency domain resource of the third resource relative to an index of a 1st subcarrier of the first resource, and the time domain resource offset is an offset of the time domain resource of the third resource relative to an index of a 1st OFDM symbol of the first resource.

With reference to the second aspect, in some implementations of the second aspect, the determining the third resource includes: determining, based on the number of OFDM symbols occupied by the first shared channel, the MCS corresponding to the first shared channel, and/or the number of OFDM symbols occupied by the DMRS, a resource corresponding to the third resource in time domain.

With reference to the second aspect, in some implementations of the second aspect, the determining the third resource includes: determining, based on the number of cells included in the cell set, the MCS corresponding to the first shared channel, and/or the scheduled bandwidth or the number of RBs that corresponds to the first shared channel, a resource corresponding to the third resource in frequency domain.

With reference to the second aspect, in some implementations of the second aspect, downlink control information DCI is sent, where the DCI indicates the third resource.

With reference to the second aspect, in some implementations of the second aspect, the DCI indicates a first reference signal resource type, the first reference signal resource type corresponds to a first pattern, and the first pattern includes position information of the third resource on the first shared channel, or the DCI indicates the first pattern.

Alternatively, the DCI indicates a first reference signal type, the first reference signal type corresponds to at least one first pattern, the first pattern includes position information of the third resource in the first resource, the first reference signal type belongs to at least one reference signal type, and each of the at least one reference signal type corresponds to at least one first pattern.

With reference to the second aspect, in some implementations of the second aspect, the first pattern belongs to at least one pattern, the at least one pattern is in one-to-one correspondence with at least one cell, the first pattern corresponds to the first cell, and the first cell belongs to the at least one cell.

With reference to the second aspect, in some implementations of the second aspect, the DCI indicates a first relationship, the first relationship is a relationship between the third resource and at least one of the number of OFDM symbols occupied by the first shared channel, the number of OFDM symbols occupied by the DMRS, the number of cells included in the cell set, the MCS corresponding to the first shared channel, or the scheduled bandwidth or the number of physical resource blocks RBs that corresponds to the first shared channel, and the first cell belongs to the cell set.

With reference to the second aspect, in some implementations of the second aspect, the DCI indicates an index of a first port, the index of the first port corresponds to a first reference signal resource type, and the first reference signal resource type corresponds to the first relationship, or the index of the first port corresponds to the first relationship.

Alternatively, the DCI indicates an index of a first port, the index of the first port corresponds to a first reference signal type, the first reference signal type corresponds to the first relationship, the first reference signal type belongs to at least one reference signal type, and each of the at least one reference signal type corresponds to at least one first relationship.

With reference to the second aspect, in some implementations of the second aspect, the first port belongs to at least one port, the first relationship belongs to at least one relationship, and the at least one port is in one-to-one correspondence with the at least one relationship.

With reference to the second aspect, in some implementations of the second aspect, the DCI further indicates the first cell.

With reference to the second aspect, in some implementations of the second aspect, the DCI corresponds to a first index, the first index corresponds to the first cell, and the first index belongs to a control resource set index.

With reference to the second aspect, in some implementations of the second aspect,
the first measurement result is an assumption about interference caused by a data signal of a second cell to the first data, the first measurement result is used for receiving of the first data, the second cell belongs to the cell set, and the second cell is different from the first cell.

It should be understood that, the second aspect is a method that is on a network device side and that corresponds to the first aspect. Related explanations, supplements, and descriptions of beneficial effects of the first aspect are also applicable to the second aspect. Details are not described herein again.

According to a third aspect, a communication apparatus is provided. The communication apparatus includes a processing module and a transceiver module. The transceiver module is configured to receive indication information of a first resource, where the first resource includes a second resource, a third resource, and a fourth resource, the second resource is used for transmission of first data, the third resource is not used for transmission of the first data, transmission of a demodulation reference signal DMRS corresponding to the first data is performed on the fourth resource, and a time domain resource corresponding to the third resource is different from a time domain resource included in the fourth resource; and the processing module is configured to determine a first measurement result based on the third resource.

With reference to the third aspect, in some implementations of the third aspect, the processing module may be further configured to receive the first data on the second resource based on the first measurement result.

With reference to the third aspect, in some implementations of the third aspect, rate matching corresponding to the first data is performed on the first resource, and the third resource belongs to a time-frequency resource corresponding to a first shared channel.

With reference to the third aspect, in some implementations of the third aspect, the first shared channel corresponds to a first cell.

With reference to the third aspect, in some implementations of the third aspect, the communication apparatus further includes the transceiver module, where the transceiver module is configured to receive, on the fourth resource, the DMRS corresponding to the first data, the DMRS is associated with a second measurement result, the second measurement result is used for receiving or sending of the first shared channel, and the fourth resource belongs to the first resource.

With reference to the third aspect, in some implementations of the third aspect, a first DMRS is associated with an interfering DMRS port, the first DMRS is carried on the first shared channel, the first DMRS belongs to the DMRS corresponding to the first data, and the second measurement result is associated with the interfering DMRS port.

With reference to the third aspect, in some implementations of the third aspect, in a resource block group RBG, the third resource corresponds to N OFDM symbols in time domain, where N is a positive integer greater than or equal to 1; and the third resource corresponds to M subcarriers in frequency domain, where M is a positive integer greater than or equal to 1.

With reference to the third aspect, in some implementations of the third aspect, when N is greater than or equal to 2, the N OFDM symbols include a first OFDM symbol and a second OFDM symbol, a difference between indexes that respectively correspond to the first OFDM symbol and the second OFDM symbol in the third resource is 1, there is an interval between the first OFDM symbol and the second OFDM symbol, and the interval includes at least one OFDM symbol.

Alternatively, when N is greater than or equal to 2, the N OFDM symbols include a first OFDM symbol and a second OFDM symbol, an index of the first OFDM symbol in the third resource is L, a corresponding index of the second OFDM symbol in the third resource is L+1, there is an interval between the first OFDM symbol and the second OFDM symbol, and the interval includes at least one OFDM symbol.

With reference to the third aspect, in some implementations of the third aspect, a symbol index corresponding to a 1st OFDM symbol in the N OFDM symbols is X+1, and X is an index of a last symbol corresponding to a front-load DMRS.

With reference to the third aspect, in some implementations of the first aspect, when the front-load DMRS includes one symbol, a symbol index is X, and the 1st symbol in the N symbols corresponds to the symbol index X+1; or when the front-load DMRS includes two symbols, symbol indexes are respectively Y and Y+1, and the 1st symbol in the N symbols corresponds to a symbol index Y+2.

With reference to the third aspect, in some implementations of the first aspect, each of the N symbols follows a symbol corresponding to one front-load DMRS, an index of any symbol of the N symbols is n+1, and n is an index of a last symbol corresponding to a front-load DMRS that is closest to the symbol.

With reference to the third aspect, in some implementations of the third aspect, the third resource further includes a third OFDM symbol, indexes corresponding to the first OFDM symbol, the second OFDM symbol, and the third OFDM symbol in the third resource are in ascending order, there is a first interval between the first OFDM symbol and the second OFDM symbol, there is a second interval between the second OFDM symbol and the third OFDM, and a number of OFDM symbols included in the first interval is the same as a number of OFDM symbols included in the second interval.

Alternatively, the third resource further includes a third OFDM symbol, the index of the first OFDM symbol in the third resource is L, the index of the second OFDM symbol in the third resource is L+1, a corresponding index of the third OFDM symbol in the third resource is L+2, there is a first interval between the first OFDM symbol and the second OFDM symbol, there is a second interval between the second OFDM symbol and the third OFDM, and a number of OFDM symbols included in the first interval is the same as a number of OFDM symbols included in the second interval.

With reference to the third aspect, in some implementations of the third aspect, the N OFDM symbols and the M subcarriers that correspond to the third resource are associated with at least one of a number of OFDM symbols occupied by the first shared channel, a number of OFDM symbols occupied by the first DMRS, a modulation and coding scheme MCS corresponding to the first shared channel, or a scheduled bandwidth or a number of RBs that corresponds to the first shared channel, and the first DMRS belongs to the DMRS corresponding to the first data.

With reference to the third aspect, in some implementations of the third aspect, the third resource is further associated with a number of cells included in a cell set, and the first cell belongs to the cell set.

With reference to the third aspect, in some implementations of the third aspect, the cell set includes at least one cell, the at least one cell is in one-to-one correspondence with at least one frequency domain resource offset and/or at least one time domain resource index offset, the frequency domain resource offset is an offset of a frequency domain resource of the third resource relative to an index of a 1st subcarrier of the first resource, and the time domain resource offset is an offset of the time domain resource of the third resource relative to an index of a 1st OFDM symbol of the first resource.

With reference to the third aspect, in some implementations of the third aspect, a number of OFDM symbols that corresponds to the third resource in time domain is determined based on the number of OFDM symbols occupied by the first shared channel, the MCS corresponding to the first shared channel, and/or the number of OFDM symbols occupied by the DMRS.

With reference to the third aspect, in some implementations of the third aspect, a number of subcarriers that corresponds to the third resource in frequency domain is determined based on the number of cells included in the cell set, the MCS corresponding to the first shared channel, and/or the scheduled bandwidth or the number of RBs that corresponds to the first shared channel.

With reference to the third aspect, in some implementations of the third aspect, the transceiver module is configured to receive downlink control information DCI, where the DCI indicates the third resource; and the processing module is configured to obtain the third resource based on the DCI.

With reference to the third aspect, in some implementations of the third aspect, the DCI indicates a first reference signal resource type, the first reference signal resource type corresponds to a first pattern, and the first pattern includes position information of the third resource on the first shared channel, or the DCI indicates the first pattern.

Alternatively, the DCI indicates a first reference signal type, the first reference signal type corresponds to at least one first pattern, the first pattern includes position information of the third resource in the first resource, the first reference signal type belongs to at least one reference signal type, and each of the at least one reference signal type corresponds to at least one first pattern.

With reference to the third aspect, in some implementations of the third aspect, the first pattern belongs to at least one pattern, the at least one pattern is in one-to-one correspondence with at least one cell, the first pattern corresponds to the first cell, and the first cell belongs to the at least one cell.

With reference to the third aspect, in some implementations of the third aspect, the DCI indicates a first relationship, the first relationship is a relationship between the third resource and at least one of the number of OFDM symbols occupied by the first shared channel, the number of OFDM symbols occupied by the DMRS, the number of cells included in the cell set, the MCS corresponding to the first shared channel, or the scheduled bandwidth or the number of physical resource blocks RBs that corresponds to the first shared channel, and the first cell belongs to the cell set.

With reference to the third aspect, in some implementations of the third aspect, the DCI indicates an index of a first port, the index of the first port corresponds to a first reference signal resource type, and the first reference signal resource type corresponds to the first relationship, or the index of the first port corresponds to the first relationship.

Alternatively, the index of the first port corresponds to a first reference signal type, the first reference signal type corresponds to the first relationship, the first reference signal type belongs to at least one reference signal type, and each of the at least one reference signal type corresponds to at least one first relationship.

With reference to the third aspect, in some implementations of the third aspect, the first port belongs to at least one port, the first relationship belongs to at least one relationship, and the at least one port is in one-to-one correspondence with the at least one relationship.

With reference to the third aspect, in some implementations of the third aspect, the DCI further indicates the first cell.

With reference to the third aspect, in some implementations of the third aspect, the DCI corresponds to a first index, the first index corresponds to the first cell, and the first index belongs to a control resource set index.

With reference to the third aspect, in some implementations of the third aspect, the first measurement result is an assumption about interference caused by a data signal of a second cell to the first data, the first measurement result is used for receiving of the first data, the second cell belongs to the cell set, and the second cell is different from the first cell.

It should be understood that, the third aspect is an implementation on an apparatus side corresponding to the first aspect. Related explanations, supplements, and descriptions of beneficial effects of the first aspect are also applicable to the third aspect. Details are not described herein again.

According to a fourth aspect, a communication apparatus is provided. The communication apparatus includes a processing module and a transceiver module. The processing module is configured to determine a first resource. The transceiver module is configured to send indication information of the first resource, where the first resource includes a second resource, a third resource, and a fourth resource, the second resource is used for transmission of first data, the third resource is not used for transmission of the first data, transmission of a demodulation reference signal DMRS corresponding to the first data is performed on the fourth resource, and a time domain resource corresponding to the third resource is different from a time domain resource included in the fourth resource.

With reference to the fourth aspect, in some implementations of the fourth aspect, the processing module may be further configured to send the first data on the second resource based on a first measurement result.

With reference to the fourth aspect, in some implementations of the fourth aspect, rate matching corresponding to the first data is performed on the first resource, and the third resource belongs to a time-frequency resource corresponding to a first shared channel.

With reference to the fourth aspect, in some implementations of the fourth aspect, the first shared channel corresponds to a first cell.

With reference to the fourth aspect, in some implementations of the fourth aspect, the transceiver module is configured to send, on the fourth resource, the DMRS corresponding to the first data, where the DMRS is associated with a second measurement result, and the second measurement result is used for receiving of the first shared channel.

With reference to the fourth aspect, in some implementations of the fourth aspect, a first DMRS is associated with an interfering DMRS port, the first DMRS is carried on the first shared channel, the first DMRS belongs to the DMRS corresponding to the first data, and the second measurement result is associated with the interfering DMRS port.

With reference to the fourth aspect, in some implementations of the fourth aspect, in a resource block group RBG, the third resource corresponds to N OFDM symbols in time domain, where N is a positive integer greater than or equal to 1; and the third resource corresponds to M subcarriers in frequency domain, where M is a positive integer greater than or equal to 1. When N is greater than or equal to 2, the N OFDM symbols include a first OFDM symbol and a second OFDM symbol, a difference between indexes that respectively correspond to the first OFDM symbol and the second OFDM symbol in the third resource is 1, there is an interval between the first OFDM symbol and the second OFDM symbol, and the interval includes at least one OFDM symbol.

Alternatively, when N is greater than or equal to 2, the N OFDM symbols include a first OFDM symbol and a second OFDM symbol, an index of the first OFDM symbol in the third resource is L, a corresponding index of the second OFDM symbol in the third resource is L+1, there is an interval between the first OFDM symbol and the second OFDM symbol, and the interval includes at least one OFDM symbol.

With reference to the fourth aspect, in some implementations of the fourth aspect, a symbol index corresponding to a 1st OFDM symbol in the N OFDM symbols is X+1, and X is an index of a last symbol corresponding to a front-load DMRS.

With reference to the fourth aspect, in some implementations of the fourth aspect, when the front-load DMRS includes one symbol, a symbol index is X, and the 1st symbol in the N symbols corresponds to the symbol index X+1; or when the front-load DMRS includes two symbols, symbol indexes are respectively Y and Y+1, and the 1st symbol in the N symbols corresponds to a symbol index Y+2.

With reference to the fourth aspect, in some implementations of the fourth aspect, each of the N symbols follows a symbol corresponding to one front-load DMRS, an index of any symbol of the N symbols is n+1, and n is an index of a last symbol corresponding to a front-load DMRS that is closest to the symbol.

With reference to the fourth aspect, in some implementations of the fourth aspect, the third resource further includes a third OFDM symbol, indexes corresponding to the first OFDM symbol, the second OFDM symbol, and the third OFDM symbol in the third resource are in ascending order, there is a first interval between the first OFDM symbol and the second OFDM symbol, there is a second interval between the second OFDM symbol and the third OFDM, and a number of OFDM symbols included in the first interval is the same as a number of OFDM symbols included in the second interval.

Alternatively, the third resource further includes a third OFDM symbol, the index of the first OFDM symbol in the third resource is L, the index of the second OFDM symbol in the third resource is L+1, a corresponding index of the third OFDM symbol in the third resource is L+2, there is a first interval between the first OFDM symbol and the second OFDM symbol, there is a second interval between the second OFDM symbol and the third OFDM, and a number of OFDM symbols included in the first interval is the same as a number of OFDM symbols included in the second interval.

With reference to the fourth aspect, in some implementations of the fourth aspect, the processing module is configured to determine the N OFDM symbols and the M subcarriers of the third resource based on at least one of a number of OFDM symbols occupied by the first shared channel, a number of OFDM symbols occupied by the DMRS, or an MCS corresponding to the first shared channel.

With reference to the fourth aspect, in some implementations of the fourth aspect, the processing module is further configured to determine the third resource based on a number of cells included in a cell set, where the first cell belongs to the cell set.

With reference to the fourth aspect, in some implementations of the fourth aspect, the cell set includes at least one cell, the at least one cell is in one-to-one correspondence with at least one frequency domain resource offset and/or at least one time domain resource index offset, the frequency domain resource offset is an offset of a frequency domain resource of the third resource relative to an index of a 1st subcarrier of the first resource, and the time domain resource offset is an offset of the time domain resource of the third resource relative to an index of a 1st OFDM symbol of the first resource.

With reference to the fourth aspect, in some implementations of the fourth aspect, the processing module is specifically configured to determine, based on the number of OFDM symbols occupied by the first shared channel, the MCS corresponding to the first shared channel, and/or the number of OFDM symbols occupied by the DMRS, a resource corresponding to the third resource in time domain.

With reference to the fourth aspect, in some implementations of the fourth aspect, the processing module is specifically configured to determine, based on the number of cells included in the cell set, the MCS corresponding to the first shared channel, and/or the scheduled bandwidth or the number of RBs that corresponds to the first shared channel, a resource corresponding to the third resource in frequency domain.

With reference to the fourth aspect, in some implementations of the fourth aspect, the transceiver module is further configured to send downlink control information DCI, where the DCI indicates the third resource.

With reference to the fourth aspect, in some implementations of the fourth aspect, the DCI indicates a first reference signal resource type, the first reference signal resource type corresponds to a first pattern, and the first pattern includes position information of the third resource on the first shared channel, or the DCI indicates the first pattern.

Alternatively, the DCI indicates a first reference signal type, the first reference signal type corresponds to at least one first pattern, the first pattern includes position information of the third resource in the first resource, the first reference signal type belongs to at least one reference signal type, and each of the at least one reference signal type corresponds to at least one first pattern.

With reference to the fourth aspect, in some implementations of the fourth aspect, the first pattern belongs to at least one pattern, the at least one pattern is in one-to-one correspondence with at least one cell, the first pattern corresponds to the first cell, and the first cell belongs to the at least one cell.

With reference to the fourth aspect, in some implementations of the fourth aspect, the DCI indicates a first relationship, the first relationship is a relationship between the third resource and at least one of the number of OFDM symbols occupied by the first shared channel, the number of OFDM symbols occupied by the DMRS, the number of cells included in the cell set, the MCS corresponding to the first shared channel, or the scheduled bandwidth or the number of physical resource blocks RBs that corresponds to the first shared channel, and the first cell belongs to the cell set.

With reference to the fourth aspect, in some implementations of the fourth aspect, the DCI indicates an index of a first port.

The index of the first port corresponds to a first reference signal resource type, and the first reference signal resource type corresponds to the first relationship, or the index of the first port corresponds to the first relationship.

Alternatively, the DCI indicates an index of a first port, the index of the first port corresponds to a first reference signal type, the first reference signal type corresponds to the first relationship, the first reference signal type belongs to at least one reference signal type, and each of the at least one reference signal type corresponds to at least one first relationship.

With reference to the fourth aspect, in some implementations of the fourth aspect, the first port belongs to at least one port, the first relationship belongs to at least one relationship, and the at least one port is in one-to-one correspondence with the at least one relationship.

With reference to the fourth aspect, in some implementations of the fourth aspect, the DCI further indicates the first cell.

With reference to the fourth aspect, in some implementations of the fourth aspect, the DCI corresponds to a first index, the first index corresponds to the first cell, and the first index belongs to a control resource set index.

With reference to the fourth aspect, in some implementations of the fourth aspect, the first measurement result is an assumption about interference caused by a data signal of a second cell to the first data, the first measurement result is used for receiving of the first data, the second cell belongs to the cell set, and the second cell is different from the first cell.

It should be understood that, the fourth aspect is an implementation on an apparatus side corresponding to the second aspect. Related explanations, supplements, and descriptions of beneficial effects of the second aspect are also applicable to the fourth aspect. Details are not described herein again.

According to a fifth aspect, a communication apparatus is provided, including a processor. The processor is coupled to a memory, and may be configured to execute instructions in the memory, to implement the method according to any one of the first aspect and the possible implementations of the first aspect. For example, the communication apparatus further includes the memory. The communication apparatus further includes a communication interface. The processor is coupled to the communication interface.

In an implementation, the communication apparatus is a network device. When the communication apparatus is the network device, the communication interface may be a transceiver or an input/output interface.

In another implementation, the communication apparatus is a chip configured in a network device. When the communication apparatus is the chip configured in the network device, the communication interface may be an input/output interface.

For example, the transceiver may be a transceiver circuit. The input/output interface may be an input/output circuit.

According to a sixth aspect, a communication apparatus is provided, including a processor. The processor is coupled to a memory, and may be configured to execute instructions in the memory, to implement the method according to any one of the second aspect and the possible implementations of the second aspect. For example, the communication apparatus further includes the memory. The communication apparatus further includes a communication interface. The processor is coupled to the communication interface.

In an implementation, the communication apparatus is a terminal device. When the communication apparatus is the terminal device, the communication interface may be a transceiver or an input/output interface.

In another implementation, the communication apparatus is a chip configured in the terminal device. When the communication apparatus is the chip configured in the terminal device, the communication interface may be an input/output interface.

For example, the transceiver may be a transceiver circuit. The input/output interface may be an input/output circuit.

According to a seventh aspect, a processor is provided, including an input circuit, an output circuit, and a processing circuit. The processing circuit is configured to: receive a signal by using the input circuit, and transmit a signal by using the output circuit, so that the processor performs the method in any one of the possible implementations of the first aspect to the fourth aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to an eighth aspect, a processing apparatus is provided, including a processor and a memory. The processor is configured to: read instructions stored in the memory, receive a signal through a receiver, transmit a signal through a transmitter, and perform the method according to any one of the possible implementations of the first aspect or the second aspect.

For example, there are one or more processors, and there are one or more memories.

For example, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in this embodiment of this application.

It should be understood that, a related data exchange process such as sending of indication information may be a process of outputting the indication information from the processor, and receiving of capability information may be a process of receiving the input capability information by the processor. Specifically, data output by the processor may be output to the transmitter, and input data received by the processor may be from the receiver. The transmitter and the receiver may be collectively referred to as a transceiver.

The processing apparatus in the eighth aspect may be one or more chips. The processor in the processing apparatus may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may be located outside the processor and exist independently.

According to a ninth aspect, a computer program product is provided. The computer program product includes a computer program (which may also be referred to as code or instructions). When the computer program is run, a computer is enabled to perform the method in any possible implementation of the first aspect or the second aspect.

According to a tenth aspect, a computer-readable storage medium is provided. The computer-readable storage medium stores a computer program (which may also be referred to as code or instructions). When the computer program is run on a computer, the method in any possible implementation of the first aspect or the second aspect is performed.

According to an eleventh aspect, a communication system is provided, including at least one terminal device and at least one network device, to perform the method in any one of the possible implementations of the first aspect or the second aspect.

**BRIEF** DESCRIPTION OF DRAWINGS

FIG. 1 is a diagram of a communication system to which a method in an embodiment of this application is applicable;
FIG. 2 shows a reference signal pattern of two configuration types;
FIG. 3 to FIG. 5 are diagrams of several time domain resources of a serving cell and a neighboring cell;
FIG. 6 is a diagram of a measurement method according to an embodiment of this application;
(a) in FIG. 7 is a diagram of a time domain resource according to an embodiment of this application;

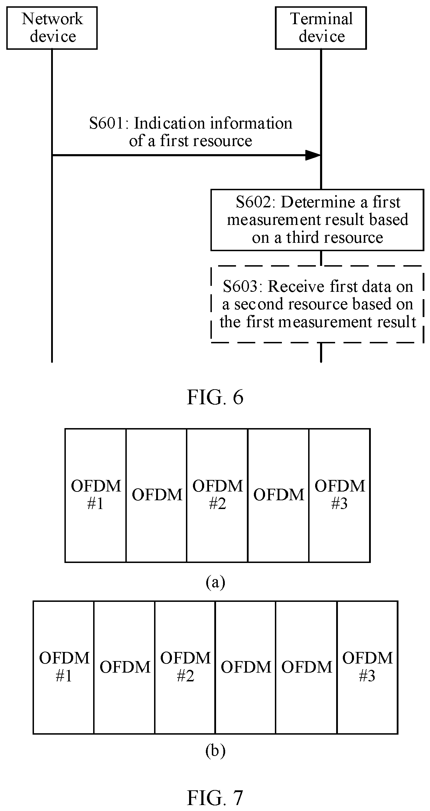

(b) in FIG. 7 is a diagram of another time domain resource according to an embodiment of this application;

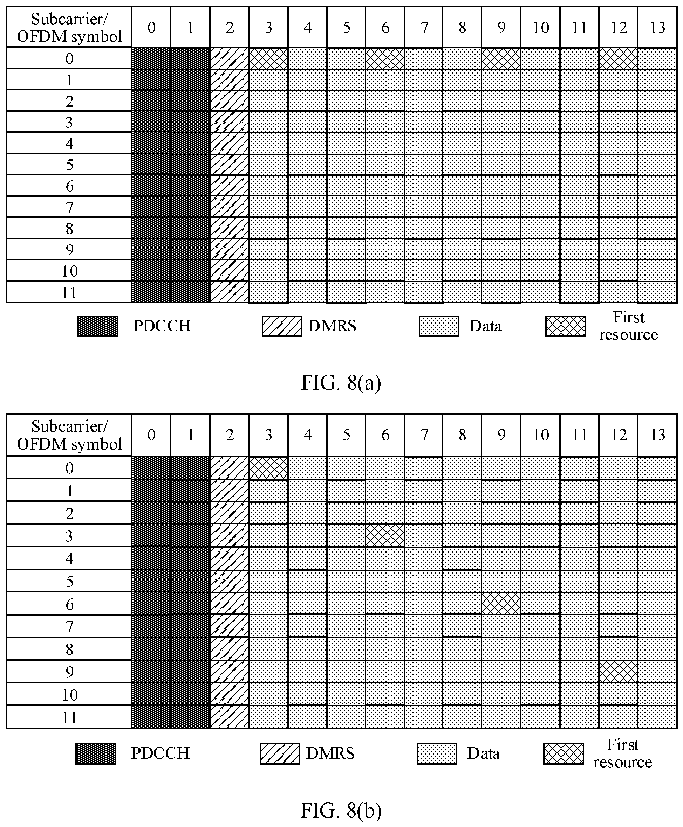

FIG. 8(a) is a diagram of a time-frequency resource according to an embodiment of this application;
FIG. 8(b) is a diagram of another time-frequency resource according to an embodiment of this application;

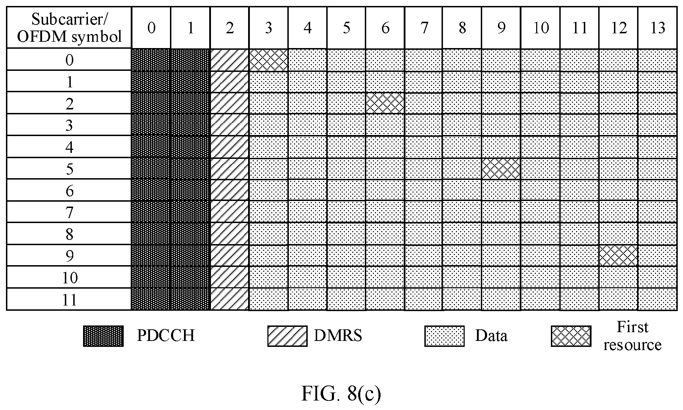

FIG. 8(c) is a diagram of still another time-frequency resource according to an embodiment of this application;

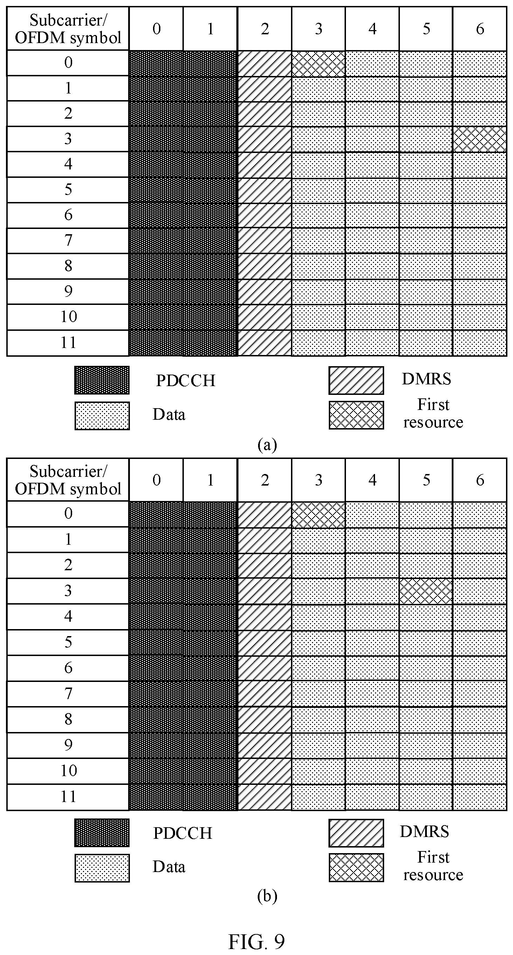

(a) in FIG. 9 is a diagram of a time-frequency resource according to an embodiment of this application;
(b) in FIG. 9 is a diagram of another time-frequency resource according to an embodiment of this application;

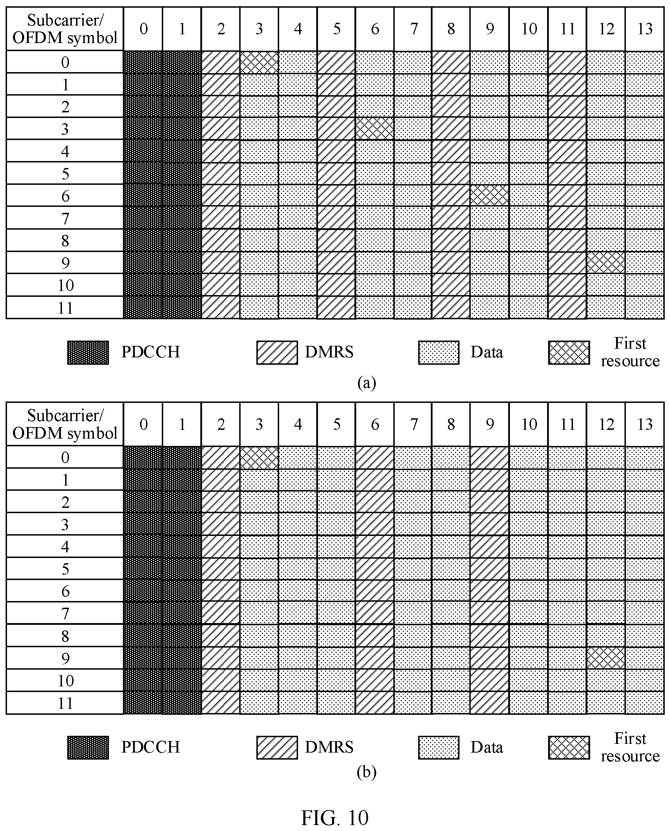

(a) in FIG. 10 is a diagram of a time-frequency resource according to an embodiment of this application;
(b) in FIG. 10 is a diagram of another time-frequency resource according to an embodiment of this application;

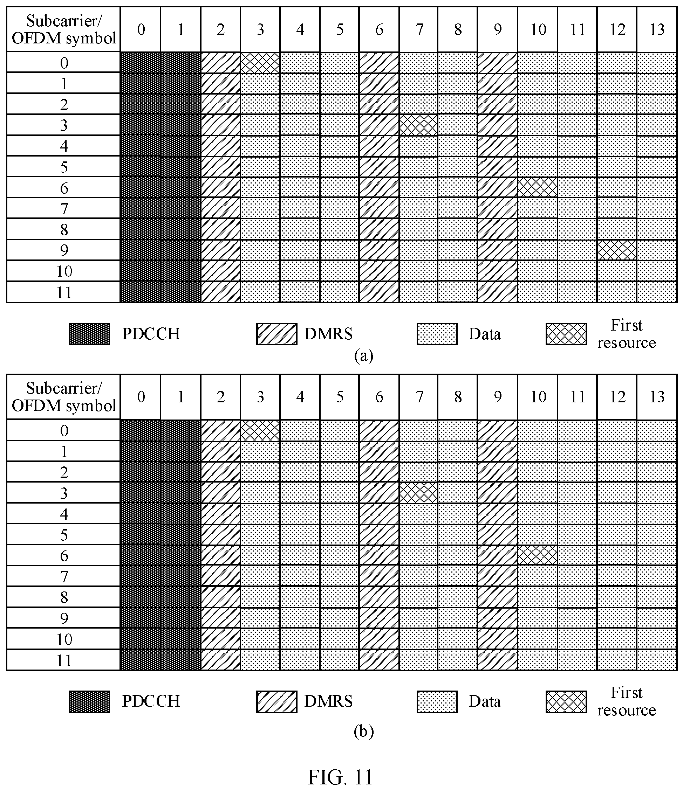

(a) in FIG. 11 is a diagram of a time-frequency resource according to an embodiment of this application;
(b) in FIG. 11 is a diagram of another time-frequency resource according to an embodiment of this application;

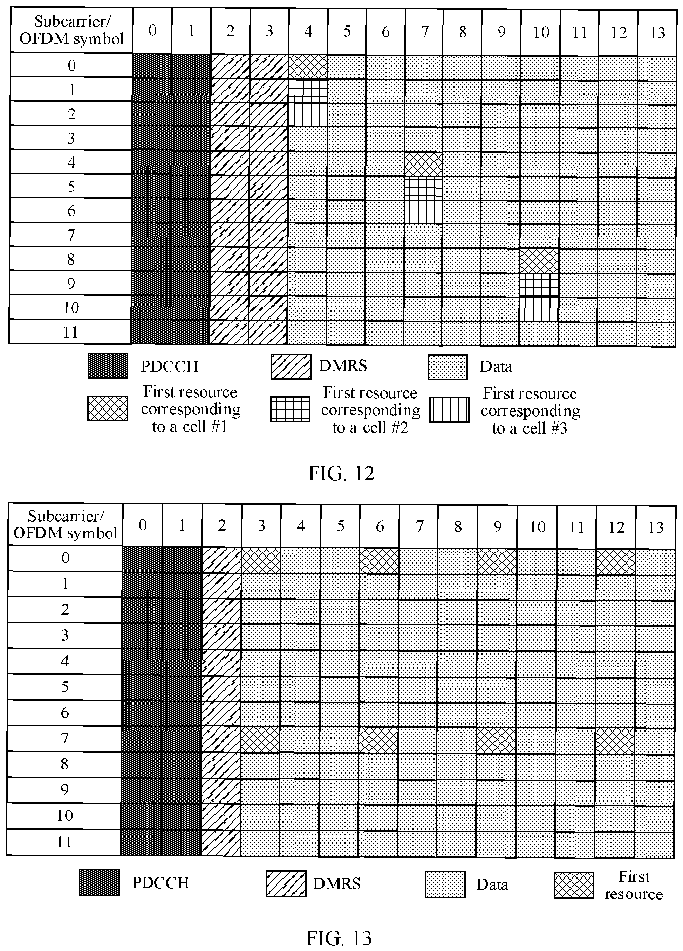

FIG. 12 is a diagram of still another time-frequency resource according to an embodiment of this application;
FIG. 13 is a diagram of still another time-frequency resource according to an embodiment of this application;

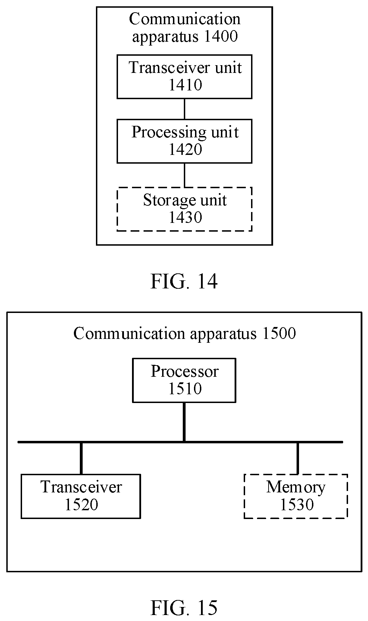

FIG. 14 is a diagram of a communication apparatus according to an embodiment of this application;
FIG. 15 is a diagram of another communication apparatus according to an embodiment of this application;

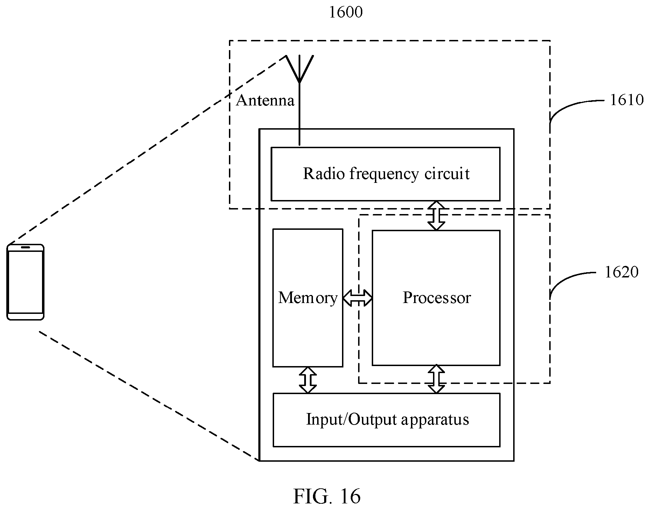

FIG. 16 is a block diagram of a network device according to an embodiment of this application; and

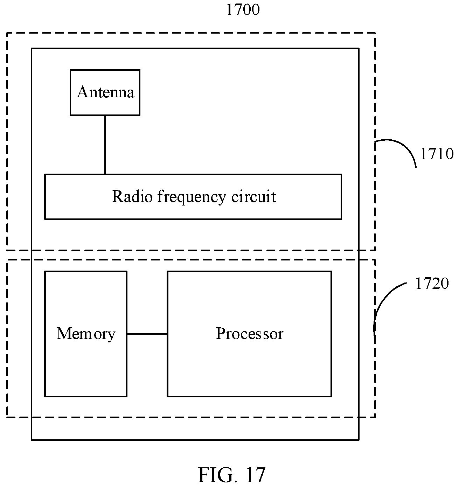

FIG. 17 is a block diagram of a terminal device according to an embodiment of this application.

**DESCRIPTION OF EMBODIMENTS**

The following describes technical solutions of embodiments in this application with reference to accompanying drawings.

The technical solutions in embodiments of this application may be applied to various communication systems, for example, a 5th generation (5th generation, 5G) system or new radio (new radio, NR), an evolved packet core (evolved packet core, EPC) network, an evolved packet system (evolved packet system, EPS), an evolved universal mobile telecommunications system (universal mobile telecommunications system, UMTS) terrestrial radio access network (evolved UMTS terrestrial radio access network, E-UTRAN), a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system.

The technical solutions in embodiments of this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

A terminal device in embodiments of this application may be referred to as a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides a user with voice/data. For example, the terminal device may be a hand-held device or a vehicle-mounted device with a wireless connection function. Currently, some terminals may be, for example, a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a hand-held device with a wireless communication function, a computing device or another processing device connected to a wireless modem, a wearable device, a terminal device in a 5G network, a terminal device in a future evolved public land mobile network (public land mobile network, PLMN), or the like. This is not limited in embodiments of this application.

By way of example but not limitation, in embodiments of this application, the terminal device may alternatively be a wearable device. The wearable device may also be referred to as a wearable intelligent device, and may be a general term of a wearable device that is intelligently designed and developed for daily wear by using a wearable technology, for example, glasses, gloves, a watch, clothing, and shoes. In other words, the wearable device is a portable device that can be directly worn on a body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In addition, the terminal device in embodiments of this application may alternatively be a terminal device in an IoT system. An IoT is an important part of future development of information technologies. A main technical feature of the IoT is connecting a thing to a network through a communication technology, to implement an intelligent network for interconnection between a person and a machine or between one thing and another.

In addition, the terminal device may alternatively include a sensor such as an intelligent printer, a train detector, or a gas station. Main functions include collecting data (some terminal devices), receiving control information and downlink data from a network device, sending an electromagnetic wave, and transmitting uplink data to the network device.

The network device in embodiments of this application may be a device configured to communicate with the terminal device. The network device may be a next-generation base station (gNodeB, gNB) in a 5G communication system, a next-generation base station in a 6G mobile communication system, a base station in a future mobile communication system, an access node in a Wi-Fi system, or the like, or an evolved NodeB (evolved NodeB, eNB), a radio network controller (radio network controller, RNC), a NodeB (NodeB, NB), a base station controller (base station controller, BSC), a home base station (for example, a home evolved NodeB or a home NodeB, HNB), or a baseband unit (baseband unit, BBU) in an LTE system, a transmission reception point (transmission reception point, TRP), a transmission point (transmission point, TP), a base transceiver station (base transceiver station, BTS), and the like.

In a network structure, the network device may include a central unit (central unit, CU) node, a distributed unit (distributed unit, DU) node, a RAN device including a CU node and a DU node, or a RAN device including a CU control plane node, a CU user plane node, and a DU node. The network device may provide a service for a cell. The terminal device communicates with the base station on a transmission resource (for example, a frequency domain resource, in other words, a frequency spectrum resource) used for the cell. The cell may be a cell corresponding to the base station (for example, a base station). The cell may belong to a macro base station, or a base station corresponding to a small cell (small cell). The small cell herein may include a metro cell (metro cell), a micro cell (micro cell), a pico cell (pico cell), a femto cell (femto cell), or the like. These small cells have features of small coverage and low transmit power, and are applicable to providing a high-speed data transmission service. The network device may be a macro base station, may be a micro base station or an indoor base station, or may be a relay node or a donor node, a device that provides a wireless communication service for the user equipment and that is in a V2X communication system, a radio controller in a cloud radio access network (cloud radio access network, CRAN) scenario, a relay station, a vehicle-mounted device, a wearable device, a network device in a future evolved network, or the like. A specific technology and a specific device form used by the network device are not limited in embodiments of this application.

In embodiments of this application, the terminal device or the network device may include a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

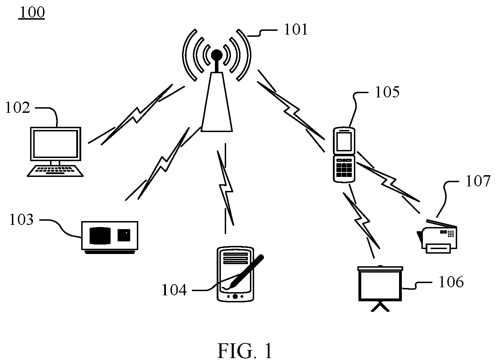

FIG. 1 is an example of an architectural diagram of a communication system 100 to which an embodiment of this application is applicable. As shown in FIG. 1, the communication system 100 may include at least one network device, for example, a network device 101 shown in FIG. 1. The communication system 100 may further include at least one terminal device, for example, terminal devices 102 to 107 shown in FIG. 1. The terminal devices 102 to 107 may be mobile or fixed. The network device 101 may provide communication coverage for a specific geographical area, and the terminal devices 102 to 107 may be terminal devices located in the coverage area. The network device 101 may communicate with one or more of the terminal devices 102 to 107 through a radio link.

Optionally, the terminal devices may directly communicate with each other. For example, direct communication between the terminal devices may be implemented by using a device-to-device (device-to-device, D2D) technology. As shown in FIG. 1, the D2D technology may be used for direct communication between the terminal device 105 and the terminal device 106, and between the terminal device 105 and the terminal device 107. The terminal device 106 and the terminal device 107 may separately or simultaneously communicate with the terminal device 105.

Alternatively, the terminal devices 105 to 107 may separately communicate with the network device 101. For example, direct communication with the network device 101 may be implemented. For example, the terminal devices 105 and 106 in the figure may directly communicate with the network device 101. Alternatively, indirect communication with the network device 101 may be implemented. For example, the terminal device 107 in the figure communicates with the network device 101 through the terminal device 105.

A plurality of antennas may be configured for each communication device in the communication system 100 shown in FIG. 1. The plurality of antennas configured for each communication device may include at least one transmit antenna configured to send a signal and at least one receive antenna configured to receive a signal. Therefore, the communication devices in the communication system 100 may communicate with each other by using a MIMO technology.

It should be understood that, FIG. 1 is merely a simplified diagram of an example for ease of understanding. The communication system 100 may further include another network device or may further include another terminal device. This is not shown in FIG. 1.

For ease of understanding of embodiments of this application, the following first briefly describes terms and backgrounds in this application.

1. Antenna port (antenna port)

An antenna port is referred to as a port for short. It may be understood as a transmit antenna identified by a receiving end, or a transmit antenna that can be spatially distinguished. One antenna port may be configured for each virtual antenna, and each virtual antenna may be a weighted combination of a plurality of physical antennas. Antenna ports may be classified into reference signal ports and data ports based on different signals carried by the antenna ports. The reference signal port may include but is not limited to a DMRS port, a channel state information reference signal (channel state information reference signal, CSI-RS) port, or the like.

This application includes an existing port and a newly added port. The existing port is a port in an existing protocol, or a port that supports technical solutions in the existing protocol. The newly added port is a port that can support the technical solutions in this application.

2. Time-frequency resource

In embodiments of this application, data or information may be carried on a time-frequency resource. The time-frequency resource may include a resource in time domain and a resource in frequency domain. In time domain, the time-frequency resource may include one or more time domain units (which may also be referred to as time units or time elements). In frequency domain, the time-frequency resource may include one or more frequency domain units.

One time domain unit may be one symbol or several symbols (for example, an orthogonal frequency division multiplexing (Orthogonal Frequency Division Multiplexing, OFDM) symbol), one slot (slot), one mini-slot (mini-slot), or one subframe (subframe). One slot may include seven or 14 symbols. One mini-slot may include at least one symbol (for example, two symbols, seven symbols, or 14 symbols, or any number of symbols less than or equal to 14 symbols). Duration of one subframe in time domain may be 1 millisecond (ms). It should be understood that, sizes of the foregoing listed time domain units are only used for ease of understanding of the solutions in this application, and do not constitute limitations on the protection scope of this application. It may be understood that, the sizes of the foregoing time domain units may be other values, and this is not limited in this application.

A frequency domain unit may be a resource block (resource block, RB), a subcarrier (subcarrier), a resource block group (resource block group, RBG), a predefined subband (subband), a precoding resource block group (precoding resource block group, PRG), a bandwidth part (bandwidth part, BWP), a resource element (resource element, RE) (which may also be referred to as a resource unit or a resource element), a carrier, or a serving cell.

3. Demodulation reference signal (demodulation reference signal, DMRS)

In a new radio (new radio, NR) system, a DMRS is used for equivalent channel matrix estimation on a data channel, for example, a physical uplink shared channel (physical uplink shared channel, PUSCH) or a control channel, for example, a physical uplink shared channel (physical downlink control channel, PDCCH), to detect and demodulate data on a corresponding channel.

The data channel PDSCH is used as an example. Same precoding is usually performed on the DMRS and a sent data signal, to ensure that the DMRS and the data signal pass through a same equivalent channel. It is assumed that a DMRS vector sent by a transmitting end is $S$, a sent data signal vector is x, and same precoding (multiplying by a same precoding matrix) is performed on the DMRS and the data signal. A data signal vector y and a DMRS vector r that are received by a receiving end may be respectively represented by using Formula (1) and Formula (2):

$$y = HPx + n = \tilde{H}x + n \qquad (1)$$

$$r = HPs + n = \tilde{H}s + n \qquad (2)$$

$\tilde{H}$ represents an equivalent channel through which the data signal and the DMRS pass, and n represents additive noise. Based on the known DMRS vector s, the receiving end may obtain estimation on the equivalent channel $\tilde{H}$ by using a channel estimation algorithm like least square (least square, LS) channel estimation or minimum mean square error (minimum mean square error, MMSE) channel estimation. Demodulation of the data signal may be completed based on the equivalent channel.

With introduction of a MIMO technology into a wireless communication system, the transmitting end may transmit multi-stream data on a same time-frequency resource, and the receiving end may recover all the multi-stream data. In this case, the DMRS is used for equivalent channel matrix estimation, and a dimension may be $N_R \times R$, where $N_R$ represents a number of receiving antennas, and R represents a number of transport streams (also referred to as a number of transport layers or a number of spatial layers). Generally, one DMRS port (port) corresponds to one transport stream, that is, for MIMO transmission with a number of transport streams of $R$, a number of needed DMRS ports is R. To ensure quality of channel estimation, DMRS ports corresponding to a plurality of transport streams are orthogonal ports.

For one DMRS port, to perform channel estimation on different time-frequency resources, a plurality of DMRSs need to be sent on a plurality of time-frequency resources. A plurality of DMRSs corresponding to one port correspond to one DMRS sequence. One DMRS sequence includes a plurality of DMRS sequence elements.

An example in which the DMRS sequence is generated based on a gold sequence is used. An $n^{th}$ DMRS sequence element in the DMRS sequence $r_l(n)$ may be generated by using the following Formula:

$$r_l(n) = \frac{1}{\sqrt{2}}\left(1 - 2 \cdot c(2n)\right) + j\frac{1}{\sqrt{2}}\left(1 - 2 \cdot c(2n+1)\right) \qquad (3)$$

$c(n)$ is a pseudo-random sequence, and $c(n)$ may be a gold sequence whose sequence length is 31. A sequence $c(n)$ whose output length is $M_{PN}$ may be determined by using Formula (4), where $n = 0, 1, ..., and\ M_{PN}$ - 1:

$$c(n) = \left( x_1(n + N_C) + x_2(n + N_C) \right) \bmod 2$$

$$x_1(n + 31) = \left( x_1(n + 3) + x_1(n) \right) \bmod 2 \qquad (4)$$

$$x_2(n + 31) = \left( x_2(n + 3) + x_2(n + 2) + x_2(n + 1) + x_2(n) \right) \bmod 2$$

$N_C = 1600$, a 1st $m$ sequence $x_1(n)$ may be initialized to $x_1(0) = 1$ and $x_1(n) = 0$, where $n = 1, 2, ...,$ and 30, and a 2nd $m$ sequence $x_2(n)$ may be initialized based on a parameter $c_{init}$, and $c_{init}$ may be determined by using Formula (5):

$$c_{init} = \left( 2^{17} \left( N_{symb}^{slot} n_{s,f}^{\mu} + l + 1 \right) \left( 2 N_{ID}^{\overline{n}_{SCID}^{\overline{\lambda}}} + 1 \right) + 2^{17} \left\lfloor \frac{\overline{\lambda}}{2} \right\rfloor + 2 N_{ID}^{\overline{n}_{SCID}^{\overline{\lambda}}} + \overline{n}_{SCID}^{\overline{\lambda}} \right) \bmod 2^{31} \quad (5)$$

$l$ represents an index value of an OFDM symbol in one slot; $N_{symb}^{slot}$ is a number of symbols included in one slot; $n_{s,f}^{\mu}$ is an index of a slot in one system frame; $\overline{n}_{SCID}^{\overline{\lambda}}$ is an initialization parameter, and a value of $\overline{n}_{SCID}^{\overline{\lambda}}$ may be 0 or 1; $N_{ID}^{\overline{n}_{SCID}^{\overline{\lambda}}} \in \{0, 1, ...,\ and\ 65535\}$ may be configured by using higher layer signaling, is related to a cell (identifier, ID), and may be generally equal to the cell ID; and $\lambda$ represents a code division multiplexing (code division multiplexing, CDM) group (group) index corresponding to the DMRS port.

A DMRS sequence corresponding to one DMRS port may be mapped to a corresponding time-frequency resource according to a preset time-frequency resource mapping rule. For an antenna *port p* (corresponding to a DMRS port $p$), an $m^{th}$ sequence element $r(m)$ in a corresponding DMRS sequence may be mapped, according to a mapping rule shown in Formula (6), to an RE whose index is $(k,l)_{p,\mu}$ :

$$\alpha_{k,l}^{(p,\mu)} = \beta_{PDSCH}^{DMRS} w_f(k') w_t(l') r(2n + k') \qquad (6)$$

The RE whose index is $(k,l)_{p,\mu}$ corresponds to an OFDM symbol whose index is $l$ in a slot in time domain, and corresponds to a subcarrier whose index is $k$ in frequency domain. $\alpha_{k,l}^{(p,\mu)}$ is a DMRS modulation symbol corresponding to the DMRS port $p$ mapped to the RE whose index is $(k,l)_{p,\mu}$, $k = \begin{cases} 4n + 2k' + \Delta, type1 \\ 6n + k' + \Delta, type2 \end{cases}$ $k =$ where $k' = 0$ and $1$; $l = \overline{l} + l'$; $n = 0, 1, ...;$ and $l' = 0$ and 1. $\Delta$ is a subcarrier offset factor; type 1 and type 2 respectively represent two DMRS configuration types (DMRS configuration types) defined in a current NR protocol; $\mu$ is a subcarrier spacing; $\overline{l}$ is an index of a start OFDM symbol occupied by the DMRS modulation symbol or an index of a reference OFDM symbol; $\beta_{PDSCH}^{DMRS}$ is a power scaling factor; $w_f(k')$ is a frequency domain cover code element corresponding to a subcarrier whose index is $k'$, and $w_t(l')$ is a time domain cover code element corresponding to an OFDM symbol whose index is $l'$; and $m = 2n + k'$.

In a mapping rule of the configuration type 1, for values of $w_f(k')$ and $w_t(l')$ that correspond to the DMRS port P and $\Delta$, refer to Table 1 or section 6.4.1.1.3 in TS 38.211.

Table 1

| P | | $\Delta$ | $w_f(k')$ | | $w_t(l')$ | |
|---|---|---|---|---|---|---|
| | | | $k'=0$ | $k'=1$ | $l'=0$ | $l'=1$ |
| 1000 | 0 | 0 | +1 | +1 | +1 | +1 |
| 1001 | 0 | 0 | +1 | -1 | +1 | +1 |
| 1002 | 1 | 1 | +1 | +1 | +1 | +1 |
| 1003 | 1 | 1 | +1 | -1 | +1 | +1 |

(continued)

| P | | Δ | $w_f(k')$ | | $w_t(l')$ | |
|---|---|---|---|---|---|---|
| | | | k'=0 | k'=1 | l'=0 | l'=1 |
| 1004 | 0 | 0 | +1 | +1 | +1 | -1 |
| 1005 | 0 | 0 | +1 | -1 | +1 | -1 |
| 1006 | 1 | 1 | +1 | +1 | +1 | -1 |
| 1007 | 1 | 1 | +1 | -1 | +1 | -1 |

In a mapping rule of the configuration type 2, values of $w_f(k')$ and $w_t(l')$ that correspond to the DMRS port $p$ and $\Delta$ may be determined according to Table 2.

Table 2

| P | λ | Δ | $w_f(k')$ | | $w_t(l')$ | |
|---|---|---|---|---|---|---|
| | | | k'=0 | k'=1 | l'=0 | l'=1 |
| 1000 | 0 | 0 | +1 | +1 | +1 | +1 |
| 1001 | 0 | 0 | +1 | -1 | +1 | +1 |
| 1002 | 1 | 2 | +1 | +1 | +1 | +1 |
| 1003 | 1 | 2 | +1 | -1 | +1 | +1 |
| 1004 | 2 | 4 | +1 | +1 | +1 | +1 |
| 1005 | 2 | 4 | +1 | -1 | +1 | +1 |
| 1006 | 0 | 0 | +1 | +1 | +1 | -1 |
| 1007 | 0 | 0 | +1 | -1 | +1 | -1 |
| 1008 | 1 | 2 | +1 | +1 | +1 | -1 |
| 1009 | 1 | 2 | +1 | -1 | +1 | -1 |
| 1010 | 2 | 4 | +1 | +1 | +1 | -1 |
| 1011 | 2 | 4 | +1 | -1 | +1 | -1 |

In Table 1 and Table 2, λ represents an index of a CDM group, and DMRS ports in a same CDM group occupy a same time-frequency resource.

4. DMRS configuration type

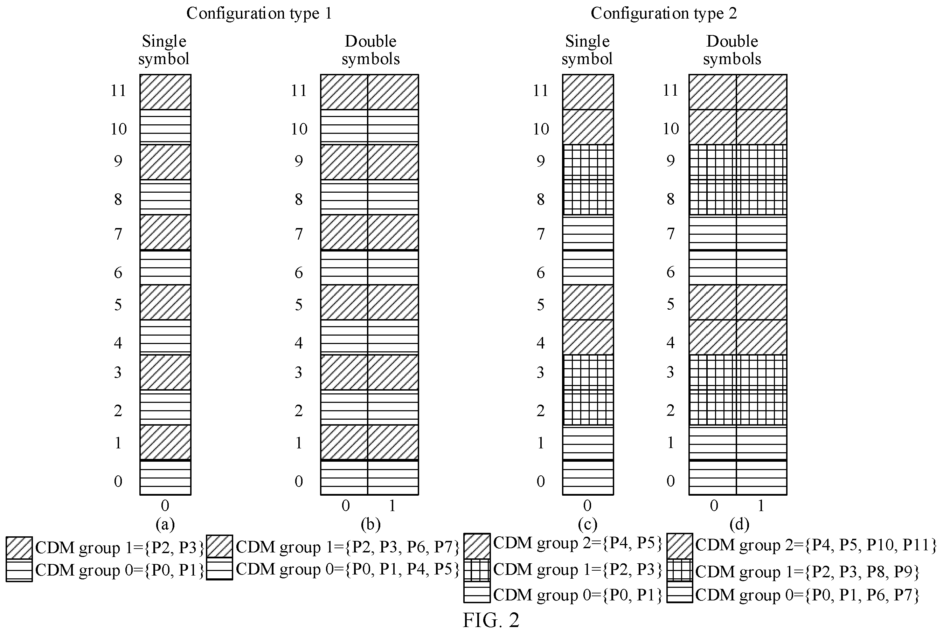

FIG. 2 shows DMRS patterns (patterns) of two configuration types. In FIG. 2, REs of different filling patterns represent different CDM groups; P0, P1, ..., and P11 represent a DMRS port 0 to a DMRS port 11; and a number on a horizontal axis represents an index of a symbol in a slot, and a number on a vertical axis represents an index of a subcarrier in an RB.

It should be understood that, in FIG. 2, a symbol 0 occupied by the DMRS and the symbol 0 and a symbol 1 that are occupied by the DMRS are merely examples. A symbol occupied by the DMRS in one slot may alternatively be another symbol, for example, the symbol 1 is occupied, or the symbol 1 and a symbol 2 are occupied.

Refer to (a) in FIG. 2. A single-symbol DMRS of a configuration type 1 supports a maximum of four orthogonal DMRS ports. The four DMRS ports are grouped into two CDM groups (a CDM group 0 and a CDM group 1), and each CDM group supports a maximum of two orthogonal DMRS ports. The CDM group 0 includes a DMRS port P0 and a DMRS port P1, and the CDM group 1 includes P2 and P3. Frequency division multiplexing (Frequency Division Multiplexing, FDM) is performed on CDM groups (being mapped to different frequency domain resources). DMRS ports included in the CDM groups are mapped to a same time domain resource (resource mapping is performed in a comb manner in frequency domain). Reference signals corresponding to the DMRS ports included in the CDM groups are distinguished by using an orthogonal cover code (orthogonal cover code, OCC), to ensure orthogonality of the DMRS ports in the CDM groups.

Refer to (b) in FIG. 2. A double-symbol DMRS of the configuration type 1 supports a maximum of eight orthogonal DMRS ports. The eight DMRS ports belong to two CDM groups (the CDM group 0 and the CDM group 1). The CDM group 0 includes P0, P1, P4, and P5; and the CDM group 1 includes P2, P3, P6, and P7. P0, P1, P4, and P5 are located in a same RE, and resource mapping is performed in a comb manner in frequency domain. Similarly, P2, P3, P6, and P7 are located in a same RE, and are mapped, in a comb manner in frequency domain, to subcarriers that are not occupied by P0, P1, P4, and P5. Two adjacent subcarriers and two OFDM symbols that are occupied by one DMRS port correspond to one OCC sequence whose length is 4 (which can be learned with reference to Table 1).

(c) and (d) in FIG. 2 respectively correspond to time-frequency resource mapping manners of the single-symbol DMRS of a configuration type 2 and the double-symbol DMRS of a configuration type 2. As shown in (c) in FIG. 2, the single-symbol DMRS of the configuration type 2 supports a maximum of six orthogonal DMRS ports. The six DMRS ports belong to three CDM groups (the CDM group 0, the CDM group 1, and a CDM group 2). As shown in (d) in FIG. 2, the double-symbol DMRS of the configuration type 2 supports a maximum of 12 orthogonal DMRS ports. The 12 DMRS ports belong to three CDM groups (the CDM group 0, the CDM group 1, and the CDM group 2). For brevity, descriptions of the CDM group of the DMRS of the configuration type 2 and a time-frequency resource occupied by each DMRS port are omitted herein.

In each data transmission process, a network device needs to notify a terminal device of an allocated antenna port (DMRS port) and a DMRS configuration type. In this way, the terminal device may perform, based on the allocated antenna port and according to a DMRS symbol generation method and a time-frequency resource mapping rule that are defined in a protocol, receiving of a DMRS signal and a channel estimation procedure on a corresponding time-frequency resource.

Currently, a manner of semi-statically configuring a DMRS type by using higher layer signaling (for example, radio resource control (radio resource control, RRC) signaling) and dynamically notifying an index of an allocated DMRS port by using downlink control information (downlink control information, DCI) is defined in an NR protocol. Details are as follows.

(1) Configure the DMRS configuration type and a number of occupied symbols by using the RRC signaling

For example, the network device configures the DMRS configuration type by using the higher layer signaling DMRS-DownlinkConfig. An example of the higher layer signaling is as follows:

```
DMRS-DownlinkConfig::=          SEQUENCE {

    dmrs-Type                   ENUMERATED {type 2}           OPTIONAL, --
Need S

    dmrs-AdditionalPosition             ENUMERATED {pos 0, pos 1, pos 3}
OPTIONAL,  -- Need S

    maxLength                   ENUMERATED {len 2}            OPTIONAL, --
Need S

    scramblingID0               INTEGER (0..65535)            OPTIONAL, --
Need S

    scramblingID1               INTEGER (0..65535)            OPTIONAL, --
Need S

    phaseTrackingRS                     SetupRelease {PTRS-DownlinkConfig}
OPTIONAL,  -- Need M

    ...,

    [[

    dmrs-Downlink-r16           ENUMERATED {enabled}          OPTIONAL
-- Need R

    ]]


}
```

The dmrs-Type field may indicate whether the DMRS is of a type 1 or of a type 2, and the maxLength field may indicate whether a single-symbol DMRS or a double-symbol DMRS is used. If maxLength is configured as len 2, whether the single-symbol DMRS or the double-symbol DMRS is used may be further indicated by using the DCI. If the maxLength field is not configured, the single-symbol DMRS is used.

(2) DCI signaling notification

The DCI signaling includes an Antenna port field, and may indicate the index of the allocated DMRS port. A plurality of DMRS port invoking manners are defined in the NR protocol for different values of configurations of dmrs-Type and maxLength. Table 3 to Table 6 respectively provide configuration tables of DMRS port invoking manners corresponding to dmrs-Type=1 and maxLength=1, dmrs-Type=1 and maxLength=2, dmrs-Type=2 and maxLength=1, and dmrs-Type=2 and maxLength=2. The antenna port field indicates an "index value" column in the table, and each index value corresponds to one or more DMRS ports.

Table 3 (dmrs-Type=1 and maxLength=1)

| One codeword: codeword 0 enabled (Codeword 0 enabled) and codeword 1 disabled (Codeword 1 disabled) | | |
|---|---|---|
| Index value (value) | Number of DMRS code division multiplexing groups without data (number of DMRS CDM group(s) without data) | DMRS port (port) |
| 0 | 1 | 0 |
| 1 | 1 | 1 |
| 2 | 1 | 0 and 1 |
| 3 | 2 | 0 |
| 4 | 2 | 1 |
| 5 | 2 | 2 |
| 6 | 2 | 3 |
| 7 | 2 | 0 and 1 |
| 8 | 2 | 2 and 3 |
| 9 | 2 | 0-2 |
| 10 | 2 | 0-3 |
| 11 | 2 | 0 and 2 |
| 12-15 | Reserved (Reserved) | Reserved |

Table 4 (dmrs-Type=1 and maxLength=2)

| One codeword: codeword 0 enabled (Codeword 0 enabled) and codeword 1 disabled (Codeword 1 disabled) | | | | Two codewords: codeword 0 enabled (Codeword 0 enabled) and codeword 1 enabled (Codeword 1 enabled) | | | |
|---|---|---|---|---|---|---|---|
| Index value (value) | Number of DMRS code division multiplexing groups without data (number of DMRS CDM group(s) without data) | DMRS port (port) | Number of front-load symbols (Number of front-load symbols) | Index value (value) | Number of DMRS code division multiplexing groups without data (number of DMRS CDM group(s) without data) | DMRS port (port) | Number of front-load symbols (Number of front-load symbols) |
| 0 | 1 | 0 | 1 | 0 | 2 | 0-4 | 2 |
| 1 | 1 | 1 | 1 | 1 | 2 | 0, 1, 2, 3, 4, and 6 | 2 |
| 2 | 1 | 0 and 1 | 1 | 2 | 2 | 0, 1, 2, 3, 4, 5, and 6 | 2 |
| 3 | 2 | 0 | 1 | 3 | 2 | 0, 1, 2, 3, 4, 5, 6, and 7 | 2 |
| 4 | 2 | 1 | 1 | 4-31 | Reserved | Reserved | Reserved |
| 5 | 2 | 2 | 1 | | | | |
| 6 | 2 | 3 | 1 | | | | |
| 7 | 2 | 0 and 1 | 1 | | | | |
| 8 | 2 | 2 and 3 | 1 | | | | |
| 9 | 2 | 0-2 | 1 | | | | |
| 10 | 2 | 0-3 | 1 | | | | |

(continued)

| One codeword: codeword 0 enabled (Codeword 0 enabled) and codeword 1 disabled (Codeword 1 disabled) | | | | Two codewords: codeword 0 enabled (Codeword 0 enabled) and codeword 1 enabled (Codeword 1 enabled) | | | |
|---|---|---|---|---|---|---|---|
| Index value (value) | Number of DMRS code division multiplexing groups without data (number of DMRS CDM group(s) without data) | DMRS port (port) | Number of front-load symbols (Number of front-load symbols) | Index value (value) | Number of DMRS code division multiplexing groups without data (number of DMRS CDM group(s) without data) | DMRS port (port) | Number of front-load symbols (Number of front-load symbols) |
| 11 | 2 | 0 and 2 | 1 | | | | |
| 12 | 2 | 0 | 2 | | | | |
| 13 | 2 | 1 | 2 | | | | |
| 14 | 2 | 2 | 2 | | | | |
| 15 | 2 | 3 | 2 | | | | |
| 16 | 2 | 4 | 2 | | | | |
| 17 | 2 | 5 | 2 | | | | |
| 18 | 2 | 6 | 2 | | | | |
| 19 | 2 | 7 | 2 | | | | |
| 20 | 2 | 0 and 1 | 2 | | | | |
| 21 | 2 | 2 and 3 | 2 | | | | |
| 22 | 2 | 4 and 5 | 2 | | | | |
| 23 | 2 | 6 and 7 | 2 | | | | |
| 24 | 2 | 0 and 4 | 2 | | | | |
| 25 | 2 | 2 and 6 | 2 | | | | |
| 26 | 2 | 0, 1, and 4 | 2 | | | | |
| 27 | 2 | 2, 3, and 6 | 2 | | | | |
| 28 | 2 | 0, 1, 4, and 5 | 2 | | | | |
| 29 | 2 | 2, 3, 6, and 7 | 2 | | | | |
| 30 | 2 | 0, 2, 4, and 6 | 2 | | | | |
| 31 | Reserved (Reserved) | Reserved | Reserved | | | | |

Table 5 (dmrs-Type=2 and maxLength=1)

| One codeword: codeword 0 enabled (Codeword 0 enabled) and codeword 1 disabled (Codeword 1 disabled) | | | Two codewords: codeword 0 enabled (Codeword 0 enabled) and codeword 1 enabled (Codeword 1 enabled) | | |
|---|---|---|---|---|---|
| Index value (value) | Number of DMRS code division multiplexing groups without data (number of DMRS CDM group(s) without data) | DMRS port (port) | Index value (value) | Number of DMRS code division multiplexing groups without data (number of DMRS CDM group(s) without data) | DMRS port (port) |
| 0 | 1 | 0 | 0 | 3 | 0-4 |

(continued)

| One codeword: codeword 0 enabled (Codeword 0 enabled) and codeword 1 disabled (Codeword 1 disabled) | | | Two codewords: codeword 0 enabled (Codeword 0 enabled) and codeword 1 enabled (Codeword 1 enabled) | | |
|---|---|---|---|---|---|
| Index value (value) | Number of DMRS code division multiplexing groups without data (number of DMRS CDM group(s) without data) | DMRS port (port) | Index value (value) | Number of DMRS code division multiplexing groups without data (number of DMRS CDM group(s) without data) | DMRS port (port) |
| 1 | 1 | 1 | 1 | 3 | 0-5 |
| 2 | 1 | 0 and 1 | 2-31 | Reserved | Reserved |
| 3 | 2 | 0 | | | |
| 4 | 2 | 1 | | | |
| 5 | 2 | 2 | | | |
| 6 | 2 | 3 | | | |
| 7 | 2 | 0 and 1 | | | |
| 8 | 2 | 2 and 3 | | | |
| 9 | 2 | 0-2 | | | |
| 10 | 2 | 0-3 | | | |
| 11 | 3 | 0 | | | |
| 12 | 3 | 1 | | | |
| 13 | 3 | 2 | | | |
| 14 | 3 | 3 | | | |
| 15 | 3 | 4 | | | |
| 16 | 3 | 5 | | | |
| 17 | 3 | 0 and 1 | | | |
| 18 | 3 | 2 and 3 | | | |
| 19 | 3 | 4 and 5 | | | |
| 20 | 3 | 0-2 | | | |
| 21 | 3 | 3-5 | | | |
| 22 | 3 | 0-3 | | | |
| 23 | 3 | 0 and 2 | | | |
| 24-31 | Reserved (Reserved) | Reserved | | | |

Table 6 (dmrs-Type=2 and maxLength=2)

| One codeword: codeword 0 enabled (Codeword 0 enabled) and codeword 1 disabled (Codeword 1 disabled) | | | | Two codewords: codeword 0 enabled (Codeword 0 enabled) and codeword 1 enabled (Codeword 1 enabled) | | | |
|---|---|---|---|---|---|---|---|
| Index value (value) | Number of DMRS code division multiplexing groups without data (number of DMRS CDM group(s) without data) | DMRS port (port) | Number of front-load symbols (number of front-load symbols) | Index value (value) | Number of DMRS code division multiplexing groups without data (number of DMRS CDM group(s) without data) | DMRS port (port) | Number of front-load symbols (number of front-load symbols) |
| 0 | 1 | 0 | 1 | 0 | 3 | 0-4 | 1 |
| 1 | 1 | 1 | 1 | 1 | 3 | 0-5 | 1 |
| 2 | 1 | 0 and 1 | 1 | 2 | 2 | 0, 1, 2, 3, and 6 | 2 |
| 3 | 2 | 0 | 1 | 3 | 2 | 0, 1, 2, 3, 6, and 8 | 2 |
| 4 | 2 | 1 | 1 | 4 | 2 | 0, 1, 2, 3, 6, 7, and 8 | 2 |
| 5 | 2 | 2 | 1 | 5 | 2 | 0, 1, 2, 3, 6, 7, 8, and 9 | 2 |
| 6 | 2 | 3 | 1 | 6-63 | Reserved | Reserved | Reserved |
| 7 | 2 | 0 and 1 | 1 | | | | |
| 8 | 2 | 2 and 3 | 1 | | | | |
| 9 | 2 | 0-2 | 1 | | | | |
| 10 | 2 | 0-3 | 1 | | | | |
| 11 | 3 | 0 | 1 | | | | |
| 12 | 3 | 1 | 1 | | | | |
| 13 | 3 | 2 | 1 | | | | |
| 14 | 3 | 3 | 1 | | | | |
| 15 | 3 | 4 | 1 | | | | |
| 16 | 3 | 5 | 1 | | | | |
| 17 | 3 | 0 and 1 | 1 | | | | |
| 18 | 3 | 2 and 3 | 1 | | | | |
| 19 | 3 | 4 and 5 | 1 | | | | |
| 20 | 3 | 0-2 | 1 | | | | |
| 21 | 3 | 3-5 | 1 | | | | |
| 22 | 3 | 0-3 | 1 | | | | |
| 23 | 3 | 0 and 2 | 1 | | | | |
| 24 | 3 | 0 | 2 | | | | |
| 25 | 3 | 1 | 2 | | | | |
| 26 | 3 | 2 | 2 | | | | |
| 27 | 3 | 3 | 2 | | | | |

(continued)

| One codeword: codeword 0 enabled (Codeword 0 enabled) and codeword 1 disabled (Codeword 1 disabled) | | | | Two codewords: codeword 0 enabled (Codeword 0 enabled) and codeword 1 enabled (Codeword 1 enabled) | | | |
|---|---|---|---|---|---|---|---|
| Index value (value) | Number of DMRS code division multiplexing groups without data (number of DMRS CDM group(s) without data) | DMRS port (port) | Number of front-load symbols (number of front-load symbols) | Index value (value) | Number of DMRS code division multiplexing groups without data (number of DMRS CDM group(s) without data) | DMRS port (port) | Number of front-load symbols (number of front-load symbols) |
| 28 | 3 | 4 | 2 | | | | |
| 29 | 3 | 5 | 2 | | | | |
| 30 | 3 | 6 | 2 | | | | |
| 31 | 3 | 7 | 2 | | | | |
| 32 | 3 | 8 | 2 | | | | |
| 33 | 3 | 9 | 2 | | | | |
| 34 | 3 | 10 | 2 | | | | |
| 35 | 3 | 11 | 2 | | | | |
| 36 | 3 | 0 and 1 | 2 | | | | |
| 37 | 3 | 2 and 3 | 2 | | | | |
| 38 | 3 | 4 and 5 | 2 | | | | |
| 39 | 3 | 6 and 7 | 2 | | | | |
| 40 | 3 | 8 and 9 | 2 | | | | |
| 41 | 3 | 10 and 11 | 2 | | | | |
| 42 | 3 | 0, 1, and 6 | 2 | | | | |
| 43 | 3 | 2, 3, and 8 | 2 | | | | |
| 44 | 3 | 4, 5, and 10 | 2 | | | | |
| 45 | 3 | 0, 1, 6, and 7 | 2 | | | | |
| 46 | 3 | 2, 3, 8, and 9 | 2 | | | | |
| 47 | 3 | 4, 5, 10, and 11 | 2 | | | | |
| 48 | 1 | 0 | 2 | | | | |
| 49 | 1 | 1 | 2 | | | | |
| 50 | 1 | 6 | 2 | | | | |
| 51 | 1 | 7 | 2 | | | | |
| 52 | 1 | 0 and 1 | 2 | | | | |
| 53 | 1 | 6 and 7 | 2 | | | | |
| 54 | 2 | 0 and 1 | 2 | | | | |
| 55 | 2 | 2 and 3 | 2 | | | | |
| 56 | 2 | 6 and 7 | 2 | | | | |

(continued)

| One codeword: codeword 0 enabled (Codeword 0 enabled) and codeword 1 disabled (Codeword 1 disabled) | | | | Two codewords: codeword 0 enabled (Codeword 0 enabled) and codeword 1 enabled (Codeword 1 enabled) | | | |
|---|---|---|---|---|---|---|---|
| Index value (value) | Number of DMRS code division multiplexing groups without data (number of DMRS CDM group(s) without data) | DMRS port (port) | Number of front-load symbols (number of front-load symbols) | Index value (value) | Number of DMRS code division multiplexing groups without data (number of DMRS CDM group(s) without data) | DMRS port (port) | Number of front-load symbols (number of front-load symbols) |
| 57 | 2 | 8 and 9 | 2 | | | | |
| 58-63 | Reserved | Reserved | Reserved | | | | |

In other words, the terminal device may determine the following information based on the DCI signaling sent by the network device and with reference to Table 3 to Table 6:

(1) Index of a DMRS port

In Table 3 to Table 6, the "index value (value)" may be obtained based on a value indicated by the "Antenna port" field in the DCI, and the "DMRS port (port)" may be obtained based on the "index value". For example, if the terminal device obtains "Antenna port"=3 by parsing the DCI in a slot, it can be learned by looking up the table that the DMRS port is 0, and a PDSCH and a DMRS that are indicated by the current DCI are transmitted on an antenna port 1000.

(2) Number of symbols occupied by the DMRS

The number of symbols occupied by the DMRS may be indicated by the "number of front-load symbols" column in the table. For example, when a value in the "number of front-load symbols" column is 1, it may indicate that the number of symbols occupied by the DMRS is 1, in other words, it indicates that the DMRS is a single-symbol DMRS. When a value in the "number of front-load symbols" column is 2, it indicates that the number of symbols occupied by the DMRS is 2, in other words, it indicates that the DMRS is a double-symbol DMRS.

(3) Number of CDM groups without data

A number of CDM groups without data may be indicated by the "number of DMRS code division multiplexing CDM groups without data" column in Table 3 to Table 6. The field can be set to three values: 1, 2, or 3 based on different DMRS configuration types.

For example, when the value is 1, it may indicate that an RE in the current CDM group 0 is not for sending data. For example, if a port belonging to the CDM group 0 is scheduled in a current slot, the RE in the current CDM group 0 is not for sending data, and an RE that is on a symbol occupied by a currently scheduled DMRS and that is not mapped to a DMRS may be scheduled for the data. When the value is 2, it may indicate that an RE in the current CDM group 0 and an RE in the current CDM group 1 are not for sending data. When the value is 3, it indicates that an RE in the current CDM group 0, an RE in the current CDM group 1, and an RE in the current CDM group 2 are not for sending data.

Currently, interference measurement may be performed based on the DMRS. However, in some communication scenarios, a difference between an interference signal to a data signal and an interference signal to a DMRS is large. As a result, when performing data demodulation, the terminal device cannot learn of accurate interference information to perform signal receiving, and communication quality is severely affected.

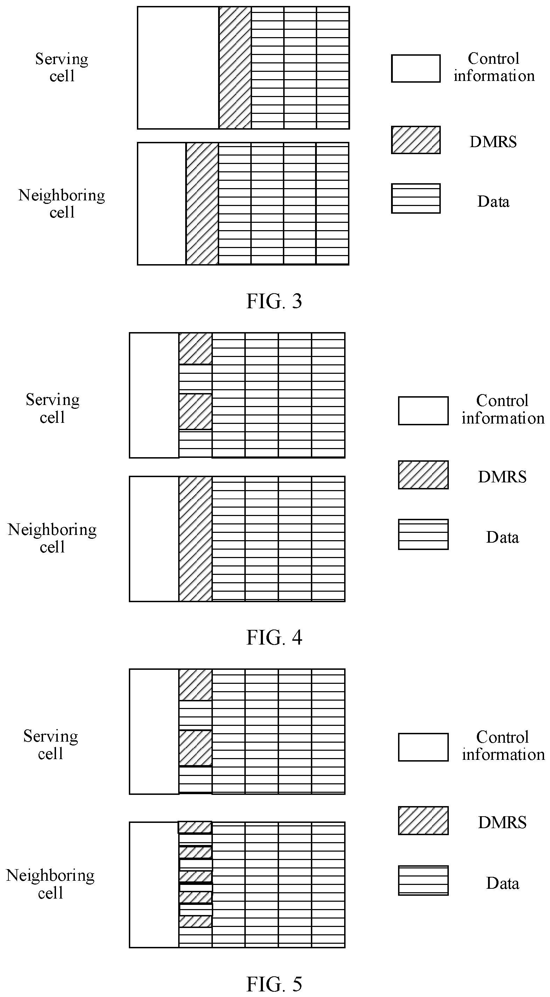

Specifically, as shown in FIG. 3, because a position of a DMRS time domain symbol of a neighboring cell cell 2 and a position of a DMRS time domain symbol of a serving cell cell 1 are not aligned, neighboring cell interference actually measured by a UE 2 is interference corresponding to a control signal, while actual interference to a signal is interference caused by a data signal of a UE 1. For the UE 1, neighboring cell interference measured based on the DMRS is interference caused by data of the UE 2. However, because the DMRS occupies only some CDM groups, strength of actual interference to data cannot be completely reflected at a position at which a DMRS reference signal is sent. That is, interference power obtained through measurement based on the DMRS is 3A, but power of actual interference to the data is A.

Alternatively, as shown in FIG. 4, because a number of CDM groups occupied by a DMRS corresponding to a neighboring cell cell 2 is different from a number of CDM groups occupied by a DMRS corresponding to a serving cell cell 1, for a UE 1, actual neighboring cell interference is interference caused by a data port 0 to a data port 3 of a UE 2, but a neighboring cell interfering port obtained through measurement is interference caused by the data port 0 and the data port 1 of the UE 2. For the UE 2, the actual neighboring cell interference is interference (power may be defined as A) caused by a data port 0 and a data port 1 of the UE 1, while the neighboring cell interference obtained through measurement is of 2A.

Further, as shown in FIG. 5, because a CDM type of a DMRS corresponding to a neighboring cell cell 2 and a CDM type of a DMRS corresponding to a serving cell cell 1 are different, neighboring cell interference obtained through measurement by a UE 1 and a UE 2 is inaccurate.

In the foregoing scenarios, the UE 1 or the UE 2 cannot demodulate data due to inaccurate interference measurement, and communication of the UE 1 or the UE 2 is affected.

For the foregoing problem, embodiments of this application provide an interference measurement method. The method can avoid a problem of inaccurate neighboring cell interference measurement, and improve measurement accuracy.

Before the solutions of this application are described, the following several points are described.

(1) A symbol (symbol) in this application may be an OFDM symbol.
(2) For ease of description, "x" in a "symbol x" in the following represents an index of a symbol in a scheduled time unit. In other words, the "symbol x" represents a symbol whose index is x in a scheduled time unit. For example, a symbol 0 represents a symbol whose index is 0 in a scheduled time unit.

Similarly, "x" in a "DMRS port (Port) x " represents an index of a DMRS port (or a DMRS port number), that is, the "DMRS port x" represents a DMRS port whose index is x. For example, a DMRS port 0 represents a DMRS port whose index is 0.

It should be noted that, an index of a symbol and an index of a DMRS port may start from 0 or 1, or start from another number. This is not limited in this application. For ease of understanding and description, in this application, an example in which an index of a symbol and an index of a DMRS port start from 0 is used for description.

(3) A resource block RB in this application may refer to 12 consecutive subcarriers in frequency domain. A resource element RE refers to one subcarrier in frequency domain and one symbol in time domain.

In embodiments of this application, for ease of differentiation and description, an RE used to carry a reference signal is denoted as a reference signal RE. It may be understood that, the reference signal RE does not necessarily carry a reference signal on each port. For a reference signal for which a port is determined, an RE occupied by the reference signal may be determined based on a reference signal pattern (pattern). Correspondingly, an RE used to carry data is denoted as a data RE. It may be understood that, frequency division multiplexing (frequency division multiplexing, FDM) or time division multiplexing (time division multiplexing, TDM) may be applied to the data RE and the reference signal RE.

(4) A density of a time-frequency resource occupied by a reference signal mentioned in embodiments of this application may be a density, in a time-frequency resource group (for example, a resource element group (resource element group, REG)), of a time-frequency resource (for example, an RE) carrying a reference signal. In other words, the "density" may be a proportion of a time-frequency resource used to carry a reference signal in a time-frequency resource group to time-frequency resources in the time-frequency resource group.

For example, if a density of a time-frequency resource occupied by a reference signal is $\rho$, $\rho = B/P$.

B represents, in one REG, a number of REs that carry a reference signal (a number of REs occupied by the reference signal), and P represents a number of all REs included in the REG, or P represents a number of REs that carry data corresponding to the reference signal (a number of REs occupied by the data corresponding to the reference signal).

It should be understood that, the foregoing listed specific units of the time-frequency resources are merely examples for description, and this application is not limited thereto. For example, $B$ may further represent, in one RB, a number of subcarriers that carry a reference signal and that are on a symbol corresponding to the reference signal (a number of subcarriers occupied by the reference signal), and $P$ represents a number of all subcarriers included in the RB, or $P$ represents a number of subcarriers that carry data corresponding to the reference signal (a number of subcarriers occupied by the data corresponding to the reference signal).

For example, assuming that a number of REs that carry a reference signal of a port P0 is 6, and a total number of REs in the REG is 12, a density of a time-frequency resource occupied by the reference signal of the port P0 is 6/12=1/2; and assuming that a number of REs that carry a reference signal of a port P8 is 3, a density of a time-frequency resource occupied by the reference signal of the port P8 is 3/12=1/4. For brevity, descriptions of a same or similar case are omitted below.

The following describes in detail the measurement method in embodiments of this application with reference to the accompanying drawings by using an example in which a reference signal is a DMRS. It should be understood that, in the following method, a network device may correspond to, for example, the network device 101 in FIG. 1, and a terminal device may be any one of a plurality of terminal devices communicatively connected to the network device, for example, any one of the terminal device 102 to the terminal device 107 in FIG. 1.

It should be noted that, in embodiments of this application, an example in which the reference signal is the DMRS is used to describe the technical solutions in embodiments of this application. This should not constitute any limitation on this application. The reference signal in this application may be any reference signal that can be used for channel estimation, for example, a channel sounding reference signal (Sounding Reference Signal, SRS), or another reference signal that can be used to implement a same or similar function. In a communication system that may appear in the future, a name of the reference signal may change. However, provided that the reference signal is essentially the same as the DMRS, the technical solutions of this application are applicable.

FIG. 6 is a diagram of a measurement method 600 according to an embodiment of this application. The method 600 may include the following steps.

S601: A network device sends indication information of a first resource to a terminal device, and correspondingly, the terminal device receives the indication information.

The first resource includes a second resource, a third resource, and a fourth resource. The second resource is used for transmission of first data. The third resource is not used for data transmission, for example, is not used for transmission of the first data. Transmission of a demodulation reference signal DMRS corresponding to the first data is performed on the fourth resource. The third resource is different from the fourth resource. For example, a time domain resource of the third resource is different from a time domain resource of the fourth resource, or a frequency domain resource of the third resource is different from a frequency domain resource of the fourth resource, or a time-frequency resource of the third resource is different from a time-frequency resource of the fourth resource. This is not limited in this embodiment of this application.

The first data may be sent by the network device to the terminal device, or may be sent by the terminal device to the network device. Specifically, a flow direction of the first data is described in detail below.

The third resource belongs to a first shared channel. The first shared channel may be a physical downlink shared channel PDSCH, or may be a physical uplink shared channel PUSCH. This is not limited in this embodiment of this application. The first shared channel corresponds to a first cell (cell). In other words, the first shared channel is a shared channel scheduled or configured by the network device for the first cell, and the first shared channel may be used by a terminal device in the first cell to perform transmission (receiving or sending) of a data (data) signal. For example, when the first shared channel is the PDSCH, the network device sends the data signal to the terminal device through the PDSCH. Correspondingly, the terminal device receives the data signal through the PDSCH. For example, when the first shared channel is the PUSCH, the terminal device sends the data signal to the network device through the PUSCH. Correspondingly, the network device receives the data signal through the PUSCH. The first cell may include at least one terminal device. In other words, the terminal device in the first cell may send or receive the data signal on the first shared channel.

The third resource is not used for transmission of the data signal of the first cell. In other words, the third resource is not used for data transmission. For example, the third resource is not used to receive or send the data signal. The third resource is a part of the first resource, and the time domain resource corresponding to the third resource is different from the time domain resource included in the fourth resource. In other words, the third resource is a time-frequency resource that is reserved in the first resource and that is not used to send or receive data. In addition, the third resource and a resource for sending the DMRS do not overlap in time domain. In other words, the third resource is neither used for sending data nor used for sending the DMRS.

Optionally, there may be a plurality of cells in a communication system, and the first cell belongs to the plurality of cells. The plurality of cells correspond to a plurality of shared channels. In a possible manner, the plurality of cells are in one-to-one correspondence with the plurality of shared channels. For example, the plurality of cells include a cell #1, a cell #2, and a cell #3, and the plurality of shared channels include a shared channel #A, a shared channel #B, and a shared channel #C. The cell #1 corresponds to the shared channel #A, the cell #2 corresponds to the shared channel #B, and the cell #3 corresponds to the shared channel #C.

Optionally, the first cell may be determined based on DCI. The DC may be DCI used to schedule the first shared channel. For example, the DCI corresponds to a first index, the first index corresponds to the first cell, and the first index belongs to a control resource set index. In other words, at least one control resource set index may be in one-to-one correspondence with at least one cell, and a cell may be determined based on a control set index corresponding to the DCI.

It should be understood that, the third resource and the second resource may be separately indicated, for example, separately indicated by using different indication information. Alternatively, the third resource and the second resource may be indicated by using a same piece of indication information. For example, the same piece of indication information includes resource information of the second resource and resource information of the third resource. This is not limited in this embodiment of this application.

The following describes the solution of this application by using an example in which the first shared channel is a PDSCH.

In a possible implementation, the PDSCH may be configured by the network device for the terminal device (or the cell). Optionally, the network device may indicate a scheduled shared channel to the terminal device by using signaling. For example, the network device sends RRC signaling to the terminal device, or the network device sends the DCI to the terminal device, or the network device indicates, by using both the RRC signaling and the DCI, the shared channel scheduled for the terminal device.

In another possible implementation, the PDSCH may alternatively be predefined. This is not limited in this embodiment of this application.

The third resource is a resource on the first shared channel. In other words, the third resource is a part or all of the resource occupied by the first shared channel. In other words, a time-frequency resource (for example, an RE) included in the third resource is a part of a time-frequency resource included in the first shared channel.

For example, the third resource may be the time-frequency resource. For example, the third resource corresponds to N OFDM symbols in time domain, and corresponds to M subcarriers in frequency domain, where N and M are separately positive integers greater than or equal to 1. In a possible manner, N is determined based on a number of OFDM symbols occupied by the first shared channel in one slot. For example, the first shared channel occupies four OFDM symbols in one slot, and a maximum value of N may be 4. In other words, a value of N may be 1, 2, 3, or 4.

Optionally, when N is greater than or equal to 2, the N OFDM symbols include a first OFDM symbol and a second OFDM symbol, a difference between indexes that correspond to the first OFDM symbol and the second OFDM symbol in the third resource is 1, there is an interval between the first OFDM symbol and the second OFDM symbol, and the interval includes at least one OFDM symbol. In other words, when N is greater than or equal to 2, the N OFDM symbols include the first OFDM symbol and the second OFDM symbol, an index of the first OFDM symbol in the third resource is L, a corresponding index of the second OFDM symbol in the third resource is L+1, there is an interval between the first OFDM symbol and the second OFDM symbol, and the interval includes at least one OFDM symbol. That the difference between the indexes is 1 means that the two OFDM symbols belong to the third resource, and an OFDM symbol between the two OFDM symbols does not belong to the third resource. In other words, resources occupied by the third resource in time domain are distributed at an interval. For example, a value of N is 3, the third resource includes an OFDM #1, an OFDM #2, and an OFDM #3, there is an interval between the OFDM #1 and the OFDM #2, and there is also an interval between the OFDM #2 and the OFDM #3.

In a possible manner, intervals between the resources occupied by the third resource in time domain are the same. In other words, the third resource is distributed at an equal interval in time domain. For example, the third resource further includes a third OFDM symbol, the index of the first OFDM symbol in the third resource is L, the index of the second OFDM symbol in the third resource is L+1, a corresponding index of the third OFDM symbol in the third resource is L+2, there is a first interval between the first OFDM symbol and the second OFDM symbol, there is a second interval between the second OFDM symbol and the third OFDM, and a number of OFDM symbols included in the first interval is the same as a number of OFDM symbols included in the second interval. For example, the third resource includes the OFDM #1, the OFDM #2, and the OFDM #3, and the interval between the OFDM #1 and the OFDM #2 is the same as the interval between the OFDM #2 and the OFDM #3. Specifically, as shown in (a) in FIG. 7, there is an OFDM between the OFDM #1 and the OFDM #2, and there is an OFDM between the OFDM #2 and the OFDM #3. It should be understood that, one OFDM symbol being used as an interval herein is merely used as an example. This is not limited in this embodiment of this application. For example, alternatively, two OFDM symbols or three OFDM symbols may be used as an interval. Examples are not described one by one.

In another possible manner, intervals between the resources occupied by the third resource in time domain are the different. In other words, the third resource is distributed at an unequal interval in time domain. For example, the third resource includes the OFDM #1, the OFDM #2, and the OFDM #3, and the interval between the OFDM #1 and the OFDM #2 is different from the interval between the OFDM #2 and the OFDM #3. Specifically, as shown in (b) in FIG. 7, there is an OFDM between the OFDM #1 and the OFDM #2, and there are two OFDMs between the OFDM #2 and the OFDM #3. It should be understood that, a number of OFDM symbols included in the interval herein is merely used as an example. For example, there are three OFDMs between the OFDM #1 and the OFDM #2, and there are five OFDMs between the OFDM #2 and the OFDM #3. Details are not described.

Optionally, a time domain resource (for example, an OFDM symbol) included in the interval may be used to carry data, or may be used for data transmission, for example, sending or receiving of a data signal.

The following describes frequency domain resources corresponding to the third resource by using an example in which intervals between the time domain resources corresponding to the third resource are the same.

In a possible manner, relative positions of the frequency domain resources corresponding to the third resource may be the same. For example, the time domain resources corresponding to the third resource include the OFDM #1, the OFDM #2, and the OFDM #3, the frequency domain resources corresponding to the third resource are a subcarrier on the OFDM #1, a subcarrier on the OFDM #2, and a subcarrier on the OFDM #3, and the three subcarriers have a same position in frequency domain.

Specifically, as shown in FIG. 8(a), a horizontal axis shows an index of an OFDM symbol (hereinafter referred to as a symbol), a vertical axis shows a subcarrier index, and an upper left corner shows a start OFDM symbol 0 and a start subcarrier 0. The symbol 0 and a symbol 1 correspond to time domain resources occupied by a PDCCH, and frequency domain resources (namely, the subcarrier 0 to a subcarrier 11) corresponding to the symbol 0 and the symbol 1 are frequency domain resources occupied by the PDCCH. A symbol 2 corresponds to a time domain resource occupied by a DMRS, and a frequency domain resource corresponding to the symbol 2 corresponds to a frequency domain resource occupied by the DMRS. A symbol 3 to a symbol 14 and frequency domain resources corresponding to the symbol 3 to the symbol 14 are time-frequency resources occupied by the PDSCH, and the symbol 3 to the symbol 14 include the third resource. The third resource includes the symbol 3 and a subcarrier 0 on the symbol 3, the symbol 6 and a subcarrier 0 on the symbol 6, the symbol 9 and a subcarrier 0 on the symbol 9, and the symbol 12 and a subcarrier 0 on the symbol 12. In other words, positions of frequency domain resources corresponding to the third resource at different time domain positions are the same, or indexes of subcarriers corresponding to the third resource on symbols with different indexes are the same.

In another possible manner, relative positions of the frequency domain resources corresponding to the third resource are different. For example, the time domain resources corresponding to the third resource include the OFDM #1, the OFDM #2, and the OFDM #3, the frequency domain resources corresponding to the third resource are a subcarrier on the OFDM #1, a subcarrier on the OFDM #2, and a subcarrier on the OFDM #3, and the three subcarriers have different positions in frequency domain.

Specifically, as shown in FIG. 8(b), a horizontal axis shows an index of an OFDM symbol (hereinafter referred to as a symbol), a vertical axis shows a subcarrier index, and an upper left corner shows a start OFDM symbol 0 and a start subcarrier 0. The symbol 0 and a symbol 1 correspond to time domain resources occupied by a PDCCH, and frequency domain resources (namely, the subcarrier 0 to a subcarrier 11) corresponding to the symbol 0 and the symbol 1 are frequency domain resources occupied by the PDCCH. A symbol 2 corresponds to a time domain resource occupied by a DMRS, and a frequency domain resource corresponding to the symbol 2 corresponds to a frequency domain resource occupied by the DMRS. A symbol 3 to a symbol 14 and frequency domain resources corresponding to the symbol 3 to the symbol 14 are time-frequency resources occupied by the PDSCH, and the symbol 3 to the symbol 14 include the third resource. The third resource includes the symbol 3 and a subcarrier 0 on the symbol 3, the symbol 6 and a subcarrier 3 on the symbol 6, the symbol 9 and a subcarrier 6 on the symbol 9, and the symbol 12 and a subcarrier 9 on the symbol 12. In other words, positions of frequency domain resources corresponding to the third resource at different time domain positions are different, or indexes of subcarriers corresponding to the third resource on symbols with different indexes are different.

It can be learned that, a main difference between FIG. 8(a) and FIG. 8(b) lies in that the third resource in FIG. 8(a) corresponds to a same subcarrier index (frequency domain position) on each OFDM symbol, and the third resource in FIG. 8(b) corresponds to a different subcarrier index on each OFDM symbol. Further, in FIG. 8(b), subcarrier indexes corresponding to the third resource on OFDM symbols are arranged in an equal-difference manner, that is, frequency domain sampling intervals corresponding to the third resource are the same.

It should be understood that, frequency domain sampling intervals corresponding to the third resource being the same is merely used as an example, and the frequency domain sampling intervals corresponding to the third resource may alternatively be different.

For example, as shown in FIG. 8(c), a horizontal axis shows an index of an OFDM symbol (hereinafter referred to as a symbol), a vertical axis shows a subcarrier index, and an upper left corner shows a start OFDM symbol 0 and a start subcarrier 0. The symbol 0 and a symbol 1 correspond to time domain resources occupied by a PDCCH, and frequency domain resources (namely, the subcarrier 0 to a subcarrier 11) corresponding to the symbol 0 and the symbol 1 are frequency domain resources occupied by the PDCCH. A symbol 2 corresponds to a time domain resource occupied by a DMRS, and a frequency domain resource corresponding to the symbol 2 corresponds to a frequency domain resource occupied by the DMRS. A symbol 3 to a symbol 14 and frequency domain resources corresponding to the symbol 3 to the symbol 14 are time-frequency resources occupied by the PDSCH, and the symbol 3 to the symbol 14 include the third resource. The third resource includes the symbol 3 and a subcarrier 0 on the symbol 3, the symbol 6 and a subcarrier 2 on the symbol 6, the symbol 9 and a subcarrier 5 on the symbol 9, and the symbol 12 and a subcarrier 9 on the symbol 12. In other words, there is no equal-difference rule between indexes of subcarriers on different symbols.

In the foregoing two possible frequency domain resource mapping manners, when positions of frequency domain resources on symbols are different, ergodicity of sampling the entire PDSCH is stronger, for example, FIG. 8(b) or FIG. 8(c). However, complexity of receiving the PDSCH by the terminal device is greatly increased because the terminal device needs to separately perform PDSCH receiving on different symbols based on different frequency domain resources. When positions of frequency domain resources on symbols are the same, ergodicity of sampling the entire PDSCH is limited. Certainly, a statistical sampling feature may be improved by adjusting the position of frequency domain. For example, the subcarrier 0 in FIG. 8(a) is adjusted to the subcarrier 6 or the subcarrier 9. The terminal does not need to assume different time-frequency resources for symbols when receiving the PDSCH, and complexity is low. Therefore, both the foregoing two time-frequency resource mapping manners may be used as candidate mapping manners of the third resource. The following describes, by using a mapping manner that "positions of frequency domain resources on symbols are different" as an example, a manner of determining the third resource.

Manner A: Determine the third resource based on a time domain resource occupied by a shared channel.

The following uses an example in which a PDSCH is used as the shared channel, an example in which an OFDM symbol is used as the time domain resource, and an example in which a subcarrier is used as a frequency domain resource for description.

That is, the third resource is determined based on the OFDM symbol occupied by the PDSCH. In other words, the third resource is related to a number of OFDM symbols occupied by the PDSCH. For example, a time domain resource corresponding to the third resource may be determined based on time domain occupied by the shared channel. Specifically, a number of OFDM symbols corresponding to the third resource may be determined based on a number of OFDM symbols occupied by the PDSCH in one slot.

For example, in FIG. 8(b), the PDSCH occupies a total of 12 symbols, namely, a symbol 2 to a symbol 13 in one slot, and the third resource occupies a total of four symbols, namely, the symbol 3, the symbol 6, the symbol 9, and the symbol 12. It may be understood that, a number of time domain resources corresponding to the third resource is positively correlated with a number of time domain resources occupied by the PDSCH. For example, when a number of symbols occupied by the PDSCH is 5, as shown in (a) in FIG. 9, a horizontal axis shows an index of an OFDM symbol (hereinafter referred to as a symbol), a vertical axis shows a subcarrier index, and an upper left corner shows a start OFDM symbol 0 and a start subcarrier 0. The symbol 0 and a symbol 1 correspond to time domain resources occupied by a PDCCH, and frequency domain resources (namely, the subcarrier 0 to a subcarrier 11) corresponding to the symbol 0 and the symbol 1 are frequency domain resources occupied by the PDCCH. A symbol 2 corresponds to a time domain resource occupied by a DMRS, and a frequency domain resource corresponding to the symbol 2 corresponds to a frequency domain resource occupied by the DMRS. The PDSCH occupies a total of five symbols, namely, the symbol 2 to the symbol 6. The third resource corresponds to two of the five symbols: the symbol 3 and the symbol 6.

In comparison to FIG. 8(b), time-frequency resources included in the third resource shown in (a) in FIG. 9 is reduced by half because time-frequency resources occupied by the PDSCH are reduced. In the third resource shown in (a) in FIG. 9, in comparison to a part of FIG. 8(b), the time domain resource and the frequency domain resource do not change. For example, time domain resources corresponding to the third resource shown in (a) in FIG. 9 are the symbol 3 and the symbol 6, and the frequency domain resources correspond to the subcarrier 0 on the symbol 3 and the subcarrier 3 on the symbol 6.

In other words, in comparison to FIG. 8(b), a number of time domain resources of the third resource shown in (a) in FIG. 9 and a number of frequency domain resources of the third resource shown in (a) in FIG. 9 are reduced, but positions do not change. Optionally, when a number of time domain resources and a number of frequency domain resources are reduced, specific positions of the resources may also change.

As shown in (b) in FIG. 9, a horizontal axis shows an index of an OFDM symbol (hereinafter referred to as a symbol), a vertical axis shows a subcarrier index, and an upper left corner shows a start OFDM symbol 0 and a start subcarrier 0. The symbol 0 and a symbol 1 correspond to time domain resources occupied by a PDCCH, and frequency domain resources (namely, the subcarrier 0 to a subcarrier 11) corresponding to the symbol 0 and the symbol 1 are frequency domain resources occupied by the PDCCH. A symbol 2 corresponds to a time domain resource occupied by a DMRS, and a frequency domain resource corresponding to the symbol 2 corresponds to a frequency domain resource occupied by the DMRS. The PDSCH occupies a total of five symbols, namely, the symbol 2 to the symbol 6. The third resource corresponds to two of the five symbols: the symbol 3 and the symbol 6. Time domain resources corresponding to the third resource are the symbol 3 and the symbol 5, and frequency domain resources corresponding to the third resource are the subcarrier 0 on the symbol 3 and the subcarrier 3 on the symbol 5.

In comparison to the third resource shown in (a) in FIG. 9, a position of the time domain resource corresponding to the third resource may be flexibly adjusted. It should be understood that, a position of the frequency domain resource corresponding to the third resource may also be flexibly adjusted. Details are not described herein again.

In conclusion, a position of a last time domain resource unit corresponding to the third resource may be a last time domain resource unit occupied by the shared channel, or a position of a last time domain resource unit corresponding to the third resource may precede a last time domain resource unit occupied by the shared channel.

In an example in which an OFDM symbol is used as a time domain resource unit, an OFDM symbol at a rearmost position in time domain (or an OFDM symbol with a largest index) in the time domain resource corresponding to the third resource precedes a last OFDM symbol (or an OFDM symbol with the largest index) occupied by the PDSCH.

FIG. 8(a), FIG. 8(b), or FIG. 8(c) is used as an example. A last OFDM symbol in the time domain resource corresponding to the third resource is the symbol 12, a last symbol occupied by the PDSCH is the symbol 13, and the symbol 12 precedes the symbol 13. Alternatively, (a) in FIG. 9 is used as an example. A last OFDM symbol in the time domain resource corresponding to the third resource is the symbol 6, a last symbol occupied by the PDSCH is the symbol 6, and a position of the last OFDM symbol in the time domain resource corresponding to the third resource is the same as a position of the last symbol occupied by the PDSCH. Alternatively, (b) in FIG. 9 is used as an example. A last OFDM symbol in the time domain resource corresponding to the third resource is the symbol 6, a last symbol occupied by the PDSCH is the symbol 5, and the symbol 5 precedes the symbol 6.

In a possible manner, a relationship between a last time domain resource unit in the time domain resource corresponding to the third resource and a last time domain resource unit in the time domain resource occupied by the shared channel may be represented as:

N=M-X, where N is an index of the last time domain resource unit in the time domain resource corresponding to the third resource, M is an index of the last time domain resource unit in the time domain resource occupied by the shared channel, and X is a positive integer. X may be predefined, for example, may be 1 or 2.

Manner B: Determine the third resource based on a symbol occupied by a DMRS.

A DMRS configuration is shown in Table 7 and Table 8.

Table 7 Position of a PDSCH DMRS in a single-symbol DMRS

| $l_d$ in symbols | DM-RS positions $\bar{l}$ | | | | | | | |
|---|---|---|---|---|---|---|---|---|
| | PDSCH matching type A | | | | PDSCH matching type B | | | |
| | *dmrs-AdditionalPosition* | | | | *dmrs-AdditionalPosition* | | | |
| | *pos 0* | *pos 1* | *pos 2* | *pos 3* | *pos 0* | *pos 1* | *pos 2* | *pos 3* |
| 2 | - | - | - | - | $l_0$ | $l_0$ | $l_0$ | $l_0$ |
| 3 | $l_0$ | $l_0$ | $l_0$ | $l_0$ | $l_0$- | $l_0$- | $l_0$ | $l_0$ |
| 4 | $l_0$ | $l_0$ | $l_0$ | $l_0$ | $l_0$ | $l_0$ | $l_0$ | $l_0$ |
| 5 | $l_0$ | $l_0$ | $l_0$ | $l_0$ | $l_0$- | $l_0$ and 4- | $l_0$ and 4 | $l_0$ and 4 |
| 6 | $l_0$ | $l_0$ | $l_0$ | $l_0$ | $l_0$ | $l_0$ and 4 | $l_0$ and 4 | $l_0$ and 4 |
| 7 | $l_0$ | $l_0$ | $l_0$ | $l_0$ | $l_0$ | $l_0$ and 4 | $l_0$ and 4 | $l_0$ and 4 |
| 8 | $l_0$ | $l_0$ **and 7** | $l_0$ **and 7** | $l_0$ **and 7** | $l_0$- | $l_0$ and 6- | $l_0$, 3, and 6 | $l_0$, 3, and 6 |
| 9 | $l_0$ | $l_0$ **and 7** | $l_0$ **and 7** | $l_0$ **and 7** | $l_0$- | $l_0$ and 7- | $l_0$, 4, and 7 | $l_0$, 4, and 7 |
| 10 | $l_0$ | $l_0$ and 9 | $l_0$, 6, and 9 | $l_0$, 6, and 9 | $l_0$- | $l_0$ and 7- | $l_0$, 4, and 7 | $l_0$, 4, and 7 |
| 11 | $l_0$ | $l_0$ and 9 | $l_0$, 6, and 9 | $l_0$, 6, and 9 | $l_0$- | $l_0$ and 8- | $l_0$, 4, and 8 | $l_0$, 3, 6, and 9 |
| 12 | $l_0$ | $l_0$ and 9 | $l_0$, 6, and 9 | $l_0$, 5, 8, and 11 | $l_0$- | $l_0$ and 9- | $l_0$, 5, and 9 | $l_0$, 3, 6, and 9 |
| 13 | $l_0$ | $l_0$ and $l_1$ | $l_0$, **7, and** 11 | $l_0$, 5, 8, and 11 | $l_0$- | $l_0$ and 9- | $l_0$, 5, and 9 | $l_0$, 3, 6, and 9 |
| 14 | $l_0$ | $l_0$ and $l_1$ | $l_0$, **7, and** 11 | $l_0$, 5, 8, and 11 | - | - | - | - |

Table 8 Position of a PDSCH DMRS in a double-symbol DMRS

| $l_d$ in symbols | DM-RS position $\bar{l}$ | | | | | |
|---|---|---|---|---|---|---|
| | PDSCH matching type A | | | PDSCH matching type B | | |
| | dmrs-AdditionalPosition | | | dmrs-AdditionalPosition | | |
| | pos 0 | pos 1 | pos 2 | pos 0 | pos 1 | pos 2 |
| <4 | | | | - | - | |
| 4 | $l_0$ | $l_0$ | | - | - | |
| 5 | $l_0$ | $l_0$ | | $l_0$- | $l_0$- | |
| 6 | $l_0$ | $l_0$ | | $l_0$ | $l_0$ | |
| 7 | $l_0$ | $l_0$ | | $l_0$ | $l_0$ | |
| 8 | $l_0$ | $l_0$ | | $l_0$- | $l_0$ and 5- | |
| 9 | $l_0$ | $l_0$ | | $l_0$- | $l_0$ and 5- | |
| 10 | $l_0$ | $l_0$ and 8 | | $l_0$- | $l_0$ and 7- | |
| 11 | $l_0$ | $l_0$ and 8 | | $l_0$- | $l_0$ and 7- | |
| 12 | $l_0$ | $l_0$ and 8 | | $l_0$- | $l_0$ and 8- | |
| 13 | $l_0$ | $l_0$ and 10 | | $l_0$- | $l_0$ and 8- | |
| 14 | $l_0$ | $l_0$ and 10 | | - | - | |

$\bar{l}$ is a start index of a symbol occupied by each group of additional DMRS positions, $I_d$ is a number of symbols occupied by the PDSCH, and pos 0/1/2/3 is a value of configuration information of different additional DMRS time domain positions corresponding to higher layer signaling, for example, may be a value of a subcarrier index. In the table, $I_0$ is a symbol following a front-load DMRS, for example, a symbol adjacent to the front-load DMRS (which is usually the same as an index of a 1st symbol occupied by the PDSCH), and other numbers are relative indexes of OFDM symbols occupied by the PDSCH in one slot. Table 7 corresponds to a single-symbol DMRS configuration, and Table 8 corresponds to a double-symbol DMRS configuration.

An example in which the single-symbol DMRS configuration and a time-frequency position of the third resource are shown in FIG. 8(b) is used, a PDSCH matching type (Mapping Type) is a type A, and a higher layer configuration is pos 3. Assuming that a number of symbols occupied by the PDSCH is 12, additional DMRS time domain positions are $I_0$, 5, 8, and 11. In other words, time domain resources occupied by an additional DMRS are the symbol 2 (the index of the 1st symbol occupied by the PDSCH), the symbol 5, the symbol 8, and the symbol 11. Specifically, as shown in (a) in FIG. 10, there is no conflict between a resource occupied by the DMRS and the third resource in the figure.

In a possible case, a conflict may occur between the resource occupied by the DMRS and the third resource. Specifically, an example in which the single-symbol DMRS configuration and a time-frequency position of the third resource are shown in FIG. 8(b) is used, and a PDSCH matching type (Mapping Type) is a type A. If an additional DMRS configuration in a higher layer configuration is pos 2, as shown in (b) in FIG. 10, time domain resources occupied by the additional DMRS are the symbol 2, the symbol 6, and the symbol 9, and time domain resources corresponding to the third resource are the symbol 3, the symbol 6, the symbol 9, and the symbol 12. The symbol 6 and the symbol 9 are occupied by the additional DMRS. To meet a requirement of the third resource, there may be the following two implementations:

Manner 1: When a resource collision occurs, the third resource may occupy a symbol following an additional DMRS time domain symbol.

For example, (b) in FIG. 10 is used as an example. Time domain resources occupied by the additional DMRS are the symbol 2, the symbol 6, and the symbol 9, and time domain resources corresponding to the third resource are the symbol 3, the symbol 6, the symbol 9, and the symbol 12. The symbol 6 and the symbol 9 are occupied by the additional DMRS (that is, the resource collision occurs). In this case, the time domain resources occupied by the third resource may be adjusted to avoid collision. Specifically, as shown in (a) in FIG. 11, the time domain resources corresponding to the third resource may be the symbol 3, a symbol 7, a symbol 10, and the symbol 12. It should be understood that, the adjustment herein, that is, the adjustment from the symbol 6 to the symbol 7 and the adjustment from the symbol 9 to the symbol 10, is merely an example rather than a limitation. For example, the symbol 6 may alternatively be adjusted to the symbol 8, and the symbol 9 may be adjusted to the symbol 11. All adjustment manners that can avoid resource collision should fall within the protection scope of this embodiment of this application.

Manner 2: The time domain resources corresponding to the third resource and the time domain resources occupied by the additional DMRS meet the following relationship:

$$l_N = l + 1,$$

where

a time domain position corresponding to the third resource is $l_N$, and l is an index of a time domain symbol occupied by the DMRS.

In other words, the time domain resource corresponding to the third resource may be adjacent to the time domain resource occupied by the additional DMRS. For example, a symbol index corresponding to a 1st symbol in N symbols is X+1, and a last symbol index corresponding to the front-load DMRS is X. In other words, when the front-load DMRS includes one symbol, a symbol index is X, and the 1st symbol in the N symbols corresponds to the symbol index X+1; or when the front-load DMRS includes two symbols, symbol indexes are respectively Y and Y+1, and the 1st symbol in the N symbols corresponds to a symbol index Y+2.

Specifically, as shown in (b) in FIG. 11, the time domain resources occupied by the additional DMRS are the symbol 2, the symbol 6, and the symbol 9, and the time domain resources corresponding to the third resource are the symbol 3, a symbol 7, and a symbol 10.

In the foregoing adjustment manner or the foregoing manner of predefining a resource determining rule, a possible conflict between a resource of the third resource and a resource of the DMRS is avoided, and a requirement of the third resource can be met, so that the third resource is normally used, for example, for sending a reference signal.

In the foregoing manner, a manner of determining the time domain resource corresponding to the third resource is described. The following describes a manner of determining the frequency domain resource corresponding to the third resource.

Manner C: Determine the third resource based on a number of cells included in a cell set.

The cell set includes the first cell described above. The cell set includes at least one cell. A cell in the cell set may be a cell participating in measurement. For example, if interference is measured, the cell in the cell set may be a cell participating in inter-cell interference measurement. When the cell set includes a plurality of cells, third resources of different cells may be different, for example, time domain resources are different, frequency domain resources are different, or time-frequency resources are different.

An example in which "relative positions of the frequency domain resources corresponding to third resources are different" is used, and an example in which a cell includes three cells: a cell #1, a cell #2, and a cell #3 is used. Third resources respectively corresponding to the three cells may be shown in FIG. 12. The third resources respectively corresponding to the cell #1, the cell #2, and the cell #3 correspond to a symbol 4, a symbol 7, and a symbol 10 in time domain. The third resource corresponding to the cell #1 corresponds to a subcarrier 0 on the symbol 4, a subcarrier 4 on the symbol 7, and a subcarrier 8 on the symbol 10 in frequency domain. The third resource corresponding to the cell #2 corresponds to a subcarrier 1 on the symbol 4, a subcarrier 5 on the symbol 7, and a subcarrier 9 on the symbol 10 in frequency domain. The third resource corresponding to the cell #3 corresponds to a subcarrier 2 on the symbol 4, a subcarrier 6 on the symbol 7, and a subcarrier 10 on the symbol 10 in frequency domain. No data is carried on these time-frequency resources.

Further, to distinguish between third resources respectively corresponding to different cells, correspondences between the third resources corresponding to the different cells and the cells may be predefined. For example, the third resources corresponding to the different cells correspond to identifiers (cell IDs) of the cells.

This manner can meet a configuration requirement of third resources of a plurality of cells, and can avoid a conflict between the third resources of the plurality of cells.

Manner D: Determine the third resource based on an MCS corresponding to the shared channel.

In a possible manner, a resource density of the third resource is determined based on the MCS corresponding to the shared channel. When the third resource is used to send a reference signal, the resource density may be understood as: sending one reference signal every F subcarriers in frequency domain, and sending one reference signal every T OFDM symbols in time domain. A PDSCH with a higher MCS requires a higher demodulation capability. Therefore, a time-frequency resource with a higher density, for example, the third resource, is needed.

For example, a density of the time domain resource corresponding to the third resource may be determined based on Table 9.

Table 9 Position of a time domain resource corresponding to a third resource in a PDSCH

| $I_d$ in symbols | MCS critical value of a PDSCH | | | |
|---|---|---|---|---|
| | Position of a time domain resource corresponding to a third resource | | | |
| | MCS 0 | MCS 1 | MCS 2 | MCS 3 |
| 2 | - | - | - | - |
| 3 | $I_N$ | $I_N$ | $I_N$ | $I_N$ |
| 4 | $I_N$ | $I_N$ | $I_N$ | $I_N$ |
| 5 | $I_N$ | $I_N$ | $I_N$ | $I_N$ |
| 6 | $I_N$ | $I_N$ | $I_N$ | $I_N$ |
| 7 | $I_N$ | $I_N$ | $I_N$ | $I_N$ |
| 8 | $I_N$ | $I_N$ and 7 | $I_N$ and 7 | $I_N$ and 7 |
| 9 | $I_N$ | $I_N$ and 7 | $I_N$ and 7 | $I_N$ and 7 |
| 10 | $I_N$ | $I_N$ and 9 | $I_N$, 6, and 9 | $I_N$, 6, and 9 |
| 11 | $I_N$ | $I_N$ and 9 | $I_N$, 6, and 9 | $I_N$, 6, and 9 |
| 12 | $I_N$ | $I_N$ and 9 | $I_N$, 6, and 9 | $I_N$, 5, 8, and 11 |
| 13 | $I_N$ | $I_N$ and $I_1$ | $I_N$, 7, and 11 | $I_N$, 5, 8, and 11 |
| 14 | $I_N$ | $I_N$ and $I_1$ | $I_N$, 7, and 11 | $I_N$, 5, 8, and 11 |

A value of L1 is 11 or 12. When the following conditions are met, the value is 12, otherwise, the value is 11:

(1) A higher layer parameter lte-CRS-ToMatchAround, lte-CRS-PatternList1, or lte-CRS-PatternList2 is configured;
(2) a value of a higher layer parameter dmrs-AdditionalPosition is 'pos 1' or $I_0$=3; and
(3) a UE reports a capability additionalDMRS-DL-Alt.

$l_d$ is symbol duration of the PDSCH (or a number of symbols occupied the PDSCH), and an MCS 0, an MCS 1, an MCS 2, and an MCS 3 are four different MCSs, for example, may be four different thresholds of an MCS. $l_N$ is a symbol following a front-load DMRS, for example, a symbol adjacent to the front-load DMRS (which is usually the same as an index of a 1st symbol occupied by the PDSCH), and other numbers are relative indexes or index offsets of OFDM symbol duration of the PDSCH in one slot. A frequency domain resource offset is an offset of the frequency domain resource of the third resource relative to an index of a 1st subcarrier of the first resource, and a time domain resource offset is an offset of the time domain resource of the third resource relative to an index of a 1st OFDM symbol of the first resource.

It can be learned that, when MCSs are different, and when pieces of OFDM symbol duration of the PDSCH are the same, the time domain resource corresponding to the third resource occupies different numbers of symbols. An example in which a number of OFDM symbols occupied by the PDSCH is 14 is used. A time domain resource corresponding to the third resource in the MCS 0 is a symbol $l_N$, time domain resources corresponding to the third resource in the MCS 1 are $l_N$ and $l_1$, time domain resources corresponding to the third resource in the MCS 2 are $l_N$, 7, and 11, time domain resources corresponding to the third resource in the MCS 3 are $l_N$, 5, 8, and 11, a number of symbols corresponding to the third resource in the MSC 3 is the largest, and further, densities of the time domain resources corresponding to the third resource in the MCS 3 are the largest. In other words, after the position of the time domain resource corresponding to the third resource is determined, the density of the time domain resource corresponding to the third resource is also determined.

For example, a density of the frequency domain resource corresponding to the third resource may be determined based on Table 10.

Table 10 Position of a frequency domain resource corresponding to a third resource in a PDSCH

| f in subcarriers | MCS critical value of a PDSCH | | | |
| --- | --- | --- | --- | --- |
| | Position of a frequency domain resource corresponding to a third resource | | | |
| | MCS 0 | MCS 1 | MCS 2 | MCS 3 |
| 2 | - | - | - | - |
| 3 | $f_N$ | $f_N$ | $f_N$ | $f_N$ |
| 4 | $f_N$ | $f_N$ | $f_N$ | $f_N$ |
| 5 | $f_N$ | $f_N$ | $f_N$ | $f_N$ |
| 6 | $f_N$ | $f_N$ | $f_N$ | $f_N$ |
| 7 | $f_N$ | $f_N$ | $f_N$ | $f_N$ |
| 8 | $f_N$ | $f_N$ and 7 | $f_N$ and 7 | $f_N$ and 7 |
| 9 | $f_N$ | $f_N$ and 7 | $f_N$ and 7 | $f_N$ and 7 |
| 10 | $f_N$ | $f_N$ and 9 | $f_N$, 6, and 9 | $f_N$, 6, and 9 |
| 11 | $f_N$ | $f_N$ and 9 | $f_N$, 6, and 9 | $f_N$, 6, and 9 |
| 12 | $f_N$ | $f_N$ and 9 | $f_N$, 6, and 9 | $f_N$, 5, 8, and 11 |

f is subcarrier duration of the PDSCH (or a number of subcarriers occupied by the PDSCH), and an MCS 0, an MCS 1, an MCS 2, and an MCS 3 are four different MCSs, for example, may be four different thresholds of an MCS. $f_N$ is a predefined position of a 1st subcarrier (which is usually the same as an index of a 1st subcarrier occupied by the PDSCH), and other numbers are relative indexes of subcarriers occupied by the PDSCH in one symbol. It can be learned that, when MCSs are different, and when numbers of subcarriers occupied by the PDSCH are the same, the time domain resource corresponding to the third resource occupies different numbers of subcarriers. An example in which a number of subcarriers occupied by the PDSCH is 12 is used. A frequency domain resource corresponding to the third resource in the MCS 0 is a symbol $f_N$, time domain resources corresponding to the third resource in the MCS 1 are $f_N$ and 9, time domain resources corresponding to the third resource in the MCS 2 are $f_N$, 6, and 9, time domain resources corresponding to the third resource in the MCS 3 are $f_N$, 5, 8, and 11, a number of subcarriers corresponding to the third resource in the MSC 3 is the largest, and further, densities of the frequency domain resources corresponding to the third resource in the MCS 3 are the largest. In other words, after the position of the frequency domain resource corresponding to the third resource is determined, the density of the frequency domain resource corresponding to the third resource is also determined.

Specifically, an example in which "relative positions of frequency domain resources corresponding to the third resource may be the same" is used. It is assumed that a number of subcarriers occupied by the PDSCH is 8. When a value of the MCS falls between the MCS 0 and the MCS 1, the frequency domain resources corresponding to the third resource are the subcarrier $f_N$ and the subcarrier 7. As shown in FIG. 13, the third resource separately corresponds to the subcarrier 0 and the subcarrier 7 on the symbol 3, the symbol 6, the symbol 9, and the symbol 12.

The foregoing implementation may be used to determine a position of a time-frequency resource. The following describes a manner of determining a density of the time-frequency resource.

For example, a time domain density of the third resource is related to the MSC. Table 11 is used as an example. A current scheduled MCS is $I_{MCS}$, and different threshold values are an MCS 0, an MCS 1, an MCS 2, and an MCS 3. When a value of $I_{MCS}$ is greater than or equal to the MCS 1 and less than or equal to the MCS 2, a time domain density of a null-data RS is 4. Similarly, when a value of $I_{MCS}$ is greater than or equal to the MCS 2 and less than or equal to the MCS 3, a time domain density of a null-data RS is 3. When a value of $I_{MCS}$ is greater than or equal to the MCS 3 and less than or equal to the MCS 4, a time domain density of a null-data RS is 1.

Table 11 Correspondence between a time domain density of a third resource and an MCS

| Scheduled MCS | **Time** density ($L_{Null-data}$ RS) |
|---|---|
| $I_{MCS}$<Null-data RS-MCS 1 | Null-data RS is not present |
| Null-data RS-MCS 1 $\leq I_{MCS}$<Null-data RS-MCS 2 | 4 |
| Null-data RS-MCS 2 $\leq I_{MCS}$<Null-data RS-MCS 3 | 2 |
| Null-data RS-MCS 3 $\leq I_{MCS}$<Null-data RS-MCS 4 | 1 |

For example, a frequency domain density of the third resource is related to a number of RBs. Table 12 is used as an example. A current scheduled MCS is $I_{MCS}$, and different threshold values are $N_{RB0}$ and $N_{RB1}$. When a value of $N_{RB}$ is greater than or equal to $N_{RB0}$ and less than or equal to $N_{RB1}$, a frequency domain density of a null-data RS is 2. When a value of $N_{RB}$ is greater than or equal to $N_{RB1}$, a frequency domain density of a null-data RS is 4.

Table 12 Correspondence between a time domain density of a third resource and a number of RBs included in a bandwidth

| Scheduled bandwidth | Frequency density ($K_{Null\ data\ RS}$) |
|---|---|
| $N_{RB}$<$N_{RB0}$ | Null-data RS is not present |
| $N_{RB0}\leq N_{RB}$<$N_{RB1}$ | 2 |
| $N_{RB1}\leq N_{RB}$ | 4 |

It should be understood that, the foregoing manners of determining the time-frequency resource corresponding to the third resource may be combined with each other, or may be separately implemented. A manner of determining the third resource is not limited in this application.

It should be further understood that, the foregoing tables are merely used as an example rather than a limitation, and each table may be used as an example based on a whole table or a part of the table.

It should be further understood that, values, indexes, and the like in this application are merely used as an example rather than a limitation.

In a possible implementation, the third resource may be predefined.

In another possible implementation, the network device configures the third resource for the terminal device.

For example, the network device sends configuration information to the terminal device, and correspondingly, the terminal device receives the configuration information. The configuration information indicates the third resource.

Optionally, the configuration information may be DCI. The DCI indicates a resource corresponding to the third resource in time domain and frequency domain. For example, the DCI indicates position information of the third resource in the PDSCH. For example, the DCI indicates an index of a time domain resource corresponding to the third resource in a time domain resource occupied by the PDSCH, and/or the DCI indicates an index of a frequency domain resource corresponding to the third resource in a frequency domain resource occupied by the PDSCH. For another example, the DCI may indicate a correspondence, for example, a relationship between the third resource and parameters in the manner A to the manner D. Specifically, Table 7 is used as an example. The DCI may indicate values of $l_d$ and pos, and the terminal device determines, based on the values of $l_d$ and pos, a position of the time domain resource corresponding to the third resource. It may be understood that, the terminal needs to configure content in Table 7 in advance, or a correspondence between a parameter and a position of a time-frequency resource in Table 7.

For example, the DCI may indicate a reference signal resource type, for example, a matching type A or a matching type B in Table 7. There is an association relationship between the reference signal resource type and each parameter. For example, the reference signal resource type corresponds to a first relationship. For example, the first relationship is that the reference signal resource type is the matching type A, and the matching type A corresponds to a specific parameter in dmrs-AdditionalPosition on the left in Table 7. For example, if the DCI indicates that the reference signal resource type is the matching type A, a value of $l_d$ is 3, and a value of pos is pos 0, the terminal device may determine, based on the DCI, that an additional DMRS time domain position is $l_0$, and further determine the position of the third resource based on the additional DMRS time domain position.

Alternatively, the DCI may indicate an index of a port, and the index of the port is associated with the parameter value in the foregoing table. For example, the index of the port corresponds to a group of parameter values. For example, the index of the port being 1 corresponds to the value of $l_d$ being 3 and the value of pos being pos 0 in Table 7. Optionally, there is an association relationship between the index of the port and the reference signal resource type, and the reference signal resource type corresponds to the first relationship. For example, the index of the port is 1, and is associated with a reference signal resource A (for example, the matching type A). The reference signal resource type A may correspond to a combination of a plurality of parameter values. The first relationship may be one of the parameter values. For example, the value of $l_d$ is 3, and the value of pos is pos 0. Optionally, indexes of at least one port are in one-to-one correspondence with at least one relationship.

Alternatively, the DCI may indicate a pattern (pattern), and the pattern is the position information of the third resource. For example, the pattern may be shown in FIG. 11. Optionally, there may be a plurality of patterns (which means that there are a plurality of pieces of time-frequency resource position information of the third resource), and the patterns are in one-to-one correspondence with a plurality of cells. Optionally, the DCI may directly indicate the pattern, or may indicate the reference signal resource type. There is a correspondence between the reference signal resource type and the pattern. For example, one reference signal resource type may correspond to a plurality of patterns, and index values of the plurality of patterns are different. The DCI may indicate the reference signal resource type and an index of a pattern that is of the reference signal resource type, and the terminal device may determine a pattern corresponding to the third resource.

Optionally, the configuration information may be RRC signaling. The RRC signaling may indicate resources corresponding to the third resource in time domain and frequency domain. For example, the RRC signaling indicates position information of the third resource in the PDSCH. Specifically, refer to the foregoing indication manner of the DCI. Details are not described herein again.

Optionally, the configuration information may be the RRC signaling and the DCI. The RRC signaling is used for resource configuration, and the DCI is used for activation. For example, the RRC signaling is used to configure a part of time-frequency resources, and the DCI indicates position information of the third resource in the part of time-frequency resources. For a specific indication manner, refer to the foregoing descriptions. Details are not described again.

S602: The terminal device determines a first measurement result based on the third resource.

The first measurement result may be used to receive or send the first shared channel. For example, when the first shared channel is the PDSCH, the first measurement result may be used by the network device to send data through the PDSCH. When the first shared channel is the PUSCH, the first measurement result may be used by the terminal device to send data through the PUSCH.

The first measurement result is obtained through measurement on the third resource. It should be understood that, the third resource belongs to the shared channel, but does not carry a data signal of the serving cell. Instead, the third resource is used for obtaining the first measurement result.

For example, the first measurement result may be an interference measurement result. For example, the interference measurement result may be interference, measured by the terminal device on the third resource, from a terminal device in another cell to the terminal device. The interference measurement result may be used to determine a channel status.

The first shared channel further includes the fourth resource, and the fourth resource is different from the time domain resource and/or the frequency domain resource of the third resource. For example, a time domain position of the fourth resource is different from that of the third resource, or a frequency domain position of the fourth resource is different from that of the third resource, or a time-frequency position of the fourth resource is different from that of the third resource.

The fourth resource may be used to receive the DMRS. In other words, the terminal device receives the DMRS on the fourth resource. The DMRS is associated with a second measurement result. For example, the terminal device performs measurement on the fourth resource by using the DMRS, to obtain the second measurement result. The second measurement result may be a result of interference measurement between the terminal device and another device in the serving cell. In a possible manner, a first DMRS is associated with an interfering port (namely, a transmission port generating interference). For example, the terminal device determines the interfering port based on the first DMRS, and the terminal device measures interference caused by the interfering port to a serving port, to obtain the second measurement result. For example, a first DMRS port number is determined, an interfering DMRS port number is determined based on the first DMRS port number, and the second measurement result is determined based on a time-frequency resource and a sequence that correspond to the interfering DMRS number.

Optionally, before the network device configures the third resource for the terminal device, the terminal device may further report capability information to the network device. The capability information indicates that the terminal device supports measurement based on the third resource, that is, supports a case in which a time-frequency resource in the shared channel is used for channel measurement instead of carrying data.

Optionally, the network device may determine the channel status based on the first measurement result and the second measurement result. For example, the first measurement result may be used as an interference signal reception assumption of a neighboring cell (for example, a second cell), and the second cell belongs to the foregoing cell set. Further, the network device may perform message transmission based on the channel status. For example, the network device may determine a precoding matrix based on the channel status, to perform transmission of a message, for example, control information or data.

Optionally, in S603, the terminal device may receive the first data on the second resource based on the first measurement result.

In the method, a part of time-frequency resources in the shared channel is not used for carrying data, the terminal device uses the part of time-frequency resources for measurement on inter-cell interference, so that accuracy of the measurement on the inter-cell interference can be improved. In addition, intra-cell interference is measured based on another part of time-frequency resources, and the time-frequency resource used for the measurement on the inter-cell interference is different from and does not overlap with the time-frequency resource used for the measurement on the intra-cell interference. This can further improve accuracy of interference measurement, so that the network device obtains an accurate channel status to perform message transmission, and further improve communication quality.

It should be understood that specific examples in embodiments of this application are merely intended to help a person skilled in the art better understand embodiments of this application, but are not intended to limit the scope of embodiments of this application.

It should be further understood that sequence numbers of the foregoing processes do not mean a sequence of performing the processes. The sequence of performing the processes should be determined according to functions and internal logic of the processes, and should not be construed as any limitation on the implementation processes of embodiments of this application.

It should be further understood that, in embodiments of this application, unless otherwise specified or a logic conflict occurs, terms and/or descriptions in different embodiments are consistent and may be mutually referenced, and technical features in different embodiments may be combined into a new embodiment based on an internal logical relationship between the technical features.

The foregoing describes in detail the measurement method provided in embodiments of this application with reference to FIG. 6 to FIG. 13. The following describes, with reference to FIG. 14 to FIG. 16, a communication apparatus provided in this application, for example, a network device and a terminal device.

FIG. 14 is a diagram of a communication apparatus 1400 according to an embodiment of this application.

The communication apparatus 1400 includes a transceiver unit 1410 and a processing unit 1420. The transceiver unit 1410 may be configured to implement a corresponding communication function. The transceiver unit 1410 may also be referred to as a communication interface or a communication unit. The processing unit 1420 may be configured to perform data processing.

Optionally, the communication apparatus 1400 further includes a storage unit. The storage unit may be configured to store instructions and/or data. The processing unit 1420 may read the instructions and/or the data in the storage unit, so that the apparatus implements actions of the network device in the foregoing method embodiments.

In a possible design, the communication apparatus 1400 may implement steps or procedures performed by the network device in the foregoing method embodiments. The transceiver unit 1410 may be configured to perform receiving and sending-related operations of the network device in the foregoing method embodiment, for example, receiving and sending-related operations of the network device in the embodiment shown in FIG. 6. The processing unit 1420 may be configured to perform processing-related operations of the network device in the foregoing method embodiment, for example, processing-related operations of the network device in the embodiment shown in FIG. 6.

In another possible design, the communication apparatus 1400 may be the terminal device in the foregoing embodiments, or may be a component (for example, a chip) of the terminal device. The communication apparatus 1400 may implement the steps or procedures performed by the terminal device in the foregoing method embodiments. The transceiver unit 1410 may be configured to perform a receiving and sending-related operation of the terminal device in the foregoing method embodiment, for example, a receiving and sending-related operation of the terminal device in the embodiment shown in FIG. 6. The processing unit 1420 may be configured to perform a processing-related operation of the terminal device in the foregoing method embodiment, for example, a processing-related operation of the terminal device in the embodiment shown in FIG. 6.

FIG. 15 is a block diagram of a communication apparatus 1500 according to an embodiment of this application. The apparatus 1500 includes a processor 1510, and the processor 1510 is coupled to a memory 1530. Optionally, the apparatus 1500 further includes the memory 1530, configured to store a computer program or instructions and/or data.

The processor 1510 is configured to execute the computer program or the instructions stored in the memory 1530, or read the data stored in the memory 1530, to perform the methods in the foregoing method embodiments.

Optionally, there are one or more processors 1510.

Optionally, there are one or more memories 1530.

Optionally, the memory 1530 and the processor 1510 are integrated together, or are disposed separately.

Optionally, as shown in FIG. 15, the apparatus 1500 further includes a transceiver 1520. The transceiver 1520 is configured to receive and/or send a signal. For example, the processor 1510 is configured to control the transceiver 1520 to receive and/or send the signal.

In a solution, the apparatus 1500 is configured to implement operations performed by the network device in the foregoing method embodiments.

For example, the processor 1510 is configured to execute the computer program or the instructions stored in the memory 1530, to implement related operations of the network device in the foregoing method embodiments, for example, the method performed by the network device in the embodiment shown in FIG. 6.

When the communication apparatus 1500 is the network device, for example, a base station, FIG. 16 is a diagram of a simplified structure of a base station. The base station includes a part 1610 and a part 1620. The part 1112 is mainly configured to receive and transmit a radio frequency signal and perform conversion between a radio frequency signal and a baseband signal. The part 1620 is mainly configured to perform baseband processing and control the base station. The part 1610 may be usually referred to as a transceiver unit, a transceiver machine, a transceiver circuit, a transceiver, or the like. The part 1620 is usually a control center of the base station, and may be usually referred to as a processing unit, and is configured to control the base station to perform a processing operation on a network device side in the foregoing method embodiments.

The transceiver unit of the part 1610 may also be referred to as a transceiver machine, a transceiver, or the like, and includes an antenna and a radio frequency circuit. The radio frequency circuit is mainly configured to perform radio frequency processing. Optionally, a component that is in the part 1610 and that is configured to implement a receiving function may be considered as a receiving unit, and a component configured to implement a sending function may be considered as a sending unit. In other words, the part 1610 includes the receiving unit and the sending unit. The receiving unit may also be referred to as a receiver machine, a receiver, a receive circuit, or the like. The sending unit may be referred to as a transmitter machine, a transmitter, a transmit circuit, or the like.

The part 1620 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, a plurality of boards may share one or more processors, or a plurality of boards share one or more memories, or a plurality of boards share one or more processors at the same time.

For example, in an implementation, the transceiver unit in the part 1610 is configured to perform receiving and sending-related steps performed by the network device in the embodiment shown in FIG. 6, and the part 1620 is configured to perform a processing-related step performed by the network device in the embodiment shown in FIG. 6.

It should be understood that FIG. 16 is merely an example rather than a limitation, and the network device including the transceiver unit and the processing unit may not depend on the structure shown in FIG. 16.

When the communication apparatus 1500 is a chip, the chip includes a transceiver unit and a processing unit. The transceiver unit may be an input/output circuit or a communication interface. The processing unit is a processor, a microprocessor, or an integrated circuit integrated on the chip.

In another solution, the communication apparatus 1500 is configured to implement operations performed by a terminal device in the foregoing method embodiments.

For example, the processor 1510 is configured to execute the computer program or the instructions stored in the memory 1530, to implement related operations of the terminal device in the foregoing method embodiments, for example, the method performed by the terminal device in the embodiment shown in FIG. 6.

In an implementation process, steps of the foregoing method may be completed by using an integrated logic circuit of hardware in the processor 1510 or instructions in a form of software. The method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory 1530, and the processor 1510 reads information in the memory 1530 and implements the steps of the foregoing method in combination with hardware of the processor 1510. To avoid repetition, details are not described herein again.

When the communication apparatus 1600 is a terminal device, FIG. 17 is a diagram of a simplified structure of a terminal device. For ease of understanding and illustration, an example in which the terminal device is a mobile phone is used in FIG. 17. As shown in FIG. 17, the terminal device includes a processor, a memory, a radio frequency circuit, an antenna, and an input/output apparatus. The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 17 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in this application.

In this embodiment of this application, the antenna and the radio frequency circuit that have a transceiver function may be considered as a transceiver unit of the terminal device, and the processor that has a processing function may be considered as a processing unit of the terminal device.

As shown in FIG. 17, the terminal device includes a transceiver unit 1710 and a processing unit 1720. The transceiver unit 1710 may also be referred to as a transceiver, a transceiver machine, a transceiver apparatus, or the like. The processing unit 1720 may also be referred to as a processor, a processing board, a processing module, a processing apparatus, or the like.

Optionally, a component that is in the transceiver unit 1710 and that is configured to implement a receiving function may be considered as a receiving unit, and a component that is in the transceiver unit 1710 and that is configured to implement a sending function may be considered as a sending unit. In other words, the transceiver unit 1710 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

For example, in an implementation, the transceiver unit 1710 is configured to perform a receiving operation of the terminal device in FIG. 6. The processing unit 1720 is configured to perform a processing action on a terminal device side in FIG. 6.

It should be understood that, FIG. 17 is merely an example rather than a limitation. The terminal device including the transceiver unit and the processing unit may not depend on the structure shown in FIG. 17.

When the communication apparatus 1500 is a chip, the chip includes a transceiver unit and a processing unit. The transceiver unit may be an input/output circuit or a communication interface. The processing unit may be a processor, a microprocessor, or an integrated circuit integrated on the chip.

An embodiment of this application further provides a network device, including a processor, where the processor is coupled to a memory, the memory is configured to store a program or instructions. When the program or the instructions are executed by the processor, the network device is enabled to perform the measurement method according to any one of the above.

An embodiment of this application further provides a network device, including a transceiver unit and a processing unit. The transceiver unit may be configured to perform steps of sending and receiving performed by the network device in the foregoing method embodiments. The processing unit may be configured to perform other steps other than sending and receiving performed by the network device in the foregoing method embodiments.

An embodiment of this application further provides a computer-readable storage medium, where the computer-readable storage medium stores a computer program or instructions. When the computer program or the instructions are executed, a computer is enabled to perform the measurement method according to any one of the above.

An embodiment of this application further provides a computer program product. The computer program product includes computer program code. When the computer program code is run on a computer, the computer is enabled to perform the method performed by the network device.

An embodiment of this application further provides a computer program product. The computer program product includes computer program code. When the computer program code is run on a computer, the computer is enabled to perform the method performed by the terminal device.

An embodiment of this application further provides a communication system. The communication system includes the network device and the terminal device in the foregoing embodiments.

In an example, the communication system includes the network device and the terminal device in the embodiments described above with reference to FIG. 3 to FIG. 8(a), FIG. 8(b), and FIG. 8(c).

For explanation and beneficial effects of related content in any communication apparatus provided above, refer to the corresponding method embodiment provided above. Details are not described herein.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed operating process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A measurement method, comprising:

   receiving indication information of a first resource, wherein the first resource comprises a second resource, a third resource, and a fourth resource, the second resource is used for transmission of first data, the third resource is not used for transmission of the first data, demodulation reference signal DMRS corresponding to the first data is transmitted on the fourth resource, and a time domain resource corresponding to the third resource is different from a time domain resource comprised in the fourth resource; and
   determining a first measurement result based on the third resource.

2. The method according to claim 1, wherein rate matching corresponding to the first data is performed on the first resource, and the first resource belongs to a time-frequency resource corresponding to a first shared channel.

3. The method according to claim 2, wherein the first shared channel corresponds to a first cell.

4. The method according to any one of claims 1 to 3, wherein the method further comprises:
receiving, on the fourth resource, the DMRS corresponding to the first data, wherein the DMRS is associated with a second measurement result, and the second measurement result is used for receiving the first data.

5. The method according to claim 4, wherein a first DMRS is associated with an interfering DMRS port, the first DMRS corresponds to the first shared channel, the first DMRS belongs to the DMRS corresponding to the first data, and the second measurement result is associated with the interfering DMRS port.

6. The method according to any one of claims 1 to 5, wherein in a resource block group RBG, the third resource corresponds to N orthogonal frequency division multiplexing OFDM symbols in time domain, wherein N is a positive integer greater than or equal to 1; and the third resource corresponds to M subcarriers in frequency domain, wherein M is a positive integer greater than or equal to 1.

7. The method according to claim 6, wherein when N is greater than or equal to 2, the N OFDM symbols comprise a first OFDM symbol and a second OFDM symbol, an index of the first OFDM symbol in the third resource is L, a corresponding index of the second OFDM symbol in the third resource is L+1, there is an interval between the first OFDM symbol and the second OFDM symbol, and the interval comprises at least one OFDM symbol.

8. The method according to claim 6 or 7, wherein a symbol index corresponding to a $1^{st}$ OFDM symbol in the N OFDM symbols is X+1, and X is an index of a last symbol corresponding to a front-load DMRS.

9. The method according to claim 7 or 8, wherein the third resource further comprises a third OFDM symbol, the index of the first OFDM symbol in the third resource is L, the index of the second OFDM symbol in the third resource is L+1, a corresponding index of the third OFDM symbol in the third resource is L+2, there is a first interval between the first OFDM symbol and the second OFDM symbol, there is a second interval between the second OFDM symbol and the third OFDM, and a number of OFDM symbols comprised in the first interval is the same as a number of OFDM symbols comprised in the second interval.

10. The method according to any one of claims 2 to 9, wherein the N OFDM symbols and the M subcarriers that correspond to the third resource are associated with at least one of a number of OFDM symbols occupied by the first shared channel, a number of OFDM symbols occupied by the first DMRS, a modulation and coding scheme MCS corresponding to the first shared channel, or a scheduled bandwidth or a number of physical resource blocks RBs that corresponds to the first shared channel, and the first DMRS belongs to the DMRS corresponding to the first data.

11. The method according to claim 10, wherein the third resource is further associated with a number of cells comprised in a cell set, and the first cell belongs to the cell set.

12. The method according to claim 11, wherein the cell set comprises at least one cell, the at least one cell is in one-to-one correspondence with at least one frequency domain resource offset and/or at least one time domain resource index offset, the frequency domain resource offset is an offset of a frequency domain resource of the third resource relative to an index of a $1^{st}$ subcarrier of the first resource, and the time domain resource offset is an offset of the time domain resource of the third resource relative to an index of a $1^{st}$ OFDM symbol of the first resource.

13. The method according to any one of claims 10 to 12, wherein a number of OFDM symbols that corresponds to the third resource in time domain is determined based on the number of OFDM symbols occupied by the first shared channel, the MCS corresponding to the first shared channel, and/or the number of OFDM symbols occupied by the DMRS.

14. The method according to any one of claims 10 to 12, wherein a number of subcarriers that corresponds to the third resource in frequency domain is determined based on the number of cells comprised in the cell set, the MCS corresponding to the first shared channel, and/or the scheduled bandwidth or the number of RBs that corresponds to the first shared channel.

15. The method according to any one of claims 1 to 14, wherein the method further comprises:

receiving downlink control information DCI, wherein the DCI indicates the third resource; and
obtaining the third resource based on the DCI.

**16.** The method according to claim 15, wherein

the DCI indicates a first reference signal type, the first reference signal type corresponds to at least one first pattern, the first pattern comprises position information of the third resource in the first resource, the first reference signal type belongs to at least one reference signal type, and each of the at least one reference signal type corresponds to at least one first pattern; or

the DCI is used to indicate the first pattern.

**17.** The method according to claim 15, wherein the DCI is used to indicate a first relationship, the first relationship is a relationship between the third resource and at least one of the number of OFDM symbols occupied by the first shared channel, the number of OFDM symbols occupied by the DMRS, the number of cells comprised in the cell set, the MCS corresponding to the first shared channel, or the scheduled bandwidth or the number of physical resource blocks RBs that corresponds to the first shared channel, and the first cell belongs to the cell set.

**18.** The method according to claim 17, wherein the DCI is used to indicate an index of a first port, and

the index of the first port corresponds to a first reference signal type, the first reference signal type corresponds to the first relationship, the first reference signal type belongs to at least one reference signal type, and each of the at least one reference signal type corresponds to at least one first relationship; or

the index of the first port corresponds to the first relationship.

**19.** The method according to claim 18, wherein the first port belongs to at least one port, the first relationship belongs to at least one relationship, and the at least one port is in one-to-one correspondence with the at least one relationship.

**20.** The method according to any one of claims 15 to 19, wherein the DCI corresponds to a first index, the first index corresponds to the first cell, and the first index belongs to a control resource set index.

**21.** The method according to any one of claims 2 to 20, wherein the first measurement result is an assumption about interference caused by a data signal of a second cell to the first data, the first measurement result is used for receiving of the first data, the second cell belongs to the cell set, and the second cell is different from the first cell.

**22.** A measurement method, comprising:

determining a first resource; and

sending indication information of the first resource, wherein the first resource comprises a second resource, a third resource, and a fourth resource, the second resource is used for transmission of first data, the third resource is not used for transmission of the first data, demodulation reference signal DMRS corresponding to the first data is transmitted on the fourth resource, and a time domain resource corresponding to the third resource is different from a time domain resource comprised in the fourth resource.

**23.** The method according to claim 22, wherein rate matching corresponding to the first data is performed on the first resource, and the first resource belongs to a time-frequency resource corresponding to a first shared channel.

**24.** The method according to claim 23, wherein the first shared channel corresponds to a first cell.

**25.** The method according to any one of claims 22 to 24, wherein the method further comprises:
sending, on the fourth resource, the DMRS corresponding to the first data, wherein the DMRS is associated with a second measurement result, and the second measurement result is used for receiving the first shared channel.

**26.** The method according to claim 25, wherein a first DMRS is associated with an interfering DMRS port, the first DMRS is carried on the first shared channel, the first DMRS belongs to the DMRS corresponding to the first data, and the second measurement result is associated with the interfering DMRS port.

**27.** The method according to any one of claims 22 to 26, wherein in a resource block group RBG, the third resource corresponds to N OFDM symbols in time domain, wherein N is a positive integer greater than or equal to 1; and the third resource corresponds to M subcarriers in frequency domain, wherein M is a positive integer greater than or equal to 1.

**28.** The method according to claim 27, wherein when N is greater than or equal to 2, the N OFDM symbols comprise a first OFDM symbol and a second OFDM symbol, an index of the first OFDM symbol in the third resource is L, a corresponding index of the second OFDM symbol in the third resource is L+1, there is an interval between the first OFDM symbol and the second OFDM symbol, and the interval comprises at least one OFDM symbol.

29. The method according to claim 27 or 28, wherein a symbol index corresponding to a 1st OFDM symbol in the N OFDM symbols is X+1, and X is an index of a last symbol corresponding to a front-load DMRS.

30. The method according to claim 28 or 29, wherein the third resource further comprises a third OFDM symbol, the index of the first OFDM symbol in the third resource is L, the index of the second OFDM symbol in the third resource is L+1, a corresponding index of the third OFDM symbol in the third resource is L+2, there is a first interval between the first OFDM symbol and the second OFDM symbol, there is a second interval between the second OFDM symbol and the third OFDM, and a number of OFDM symbols comprised in the first interval is the same as a number of OFDM symbols comprised in the second interval.

31. The method according to any one of claims 23 to 30, wherein the method further comprises:
determining, based on at least one of a number of OFDM symbols occupied by the first shared channel, a number of OFDM symbols occupied by the DMRS, an MCS corresponding to the first shared channel, or a scheduled bandwidth or a number of RBs that corresponds to the first shared channel, the N OFDM symbols and the M subcarriers that correspond to the third resource.

32. The method according to claim 31, wherein the method further comprises:
determining the third resource based on a number of cells comprised in a cell set, wherein the first cell belongs to the cell set.

33. The method according to claim 32, wherein the cell set comprises at least one cell, the at least one cell is in one-to-one correspondence with at least one frequency domain resource offset and/or at least one time domain resource index offset, the frequency domain resource offset is an offset of a frequency domain resource of the third resource relative to an index of a 1st subcarrier of the first resource, and the time domain resource offset is an offset of the time domain resource of the third resource relative to an index of a 1st OFDM symbol of the first resource.

34. The method according to claim 32 or 33, wherein the method comprises:
determining, based on the number of OFDM symbols occupied by the first shared channel, the MCS corresponding to the first shared channel, and/or the number of OFDM symbols occupied by the DMRS, a resource corresponding to the third resource in time domain.

35. The method according to any one of claims 32 to 34, wherein the method comprises:
determining, based on the number of cells comprised in the cell set, the MCS corresponding to the first shared channel, and/or the scheduled bandwidth or the number of RBs that corresponds to the first shared channel, a resource corresponding to the third resource in frequency domain.

36. The method according to any one of claims 22 to 35, wherein the method further comprises:
sending downlink control information DCI, wherein the DCI indicates the third resource.

37. The method according to claim 36, wherein the DCI indicates a first reference signal type, the first reference signal type corresponds to at least one first pattern, the first pattern comprises position information of the third resource in the first resource, the first reference signal type belongs to at least one reference signal type, and each of the at least one reference signal type corresponds to at least one first pattern; or
the DCI is used to indicate the first pattern.

38. The method according to claim 36, wherein the DCI is used to indicate a first relationship, the first relationship is a relationship between the third resource and at least one of the number of OFDM symbols occupied by the first shared channel, the number of OFDM symbols occupied by the DMRS, the number of cells comprised in the cell set, the MCS corresponding to the first shared channel, or the scheduled bandwidth or the number of physical resource blocks RBs that corresponds to the first shared channel, and the first cell belongs to the cell set.

39. The method according to claim 38, wherein the DCI is used to indicate an index of a first port, the index of the first port corresponds to a first reference signal type, the first reference signal type corresponds to the first relationship, the first reference signal type belongs to at least one reference signal type, and each of the at least one reference signal type corresponds to at least one first relationship; or
the index of the first port corresponds to the first relationship.

40. The method according to claim 39, wherein the first port belongs to at least one port, the first relationship belongs to at least one relationship, and the at least one port is in one-to-one correspondence with the at least one relationship.

41. The method according to any one of claims 36 to 40, wherein the DCI corresponds to a first index, the first index corresponds to the first cell, and the first index belongs to a control resource set index.

42. The method according to any one of claims 22 to 41, wherein the first measurement result is an assumption about interference caused by a data signal of a second cell to the first data, the first measurement result is used for receiving of the first data, the second cell belongs to the cell set, and the second cell is different from the first cell.

43. A communication apparatus, comprising a module or a unit configured to perform the method according to any one of claims 1 to 21.

44. A communication apparatus, comprising a module or a unit configured to perform the method according to any one of claims 22 to 42.

45. A communication apparatus, comprising:
a processor, configured to execute computer instructions stored in a memory, to enable the apparatus to perform the method according to any one of claims 1 to 42.

46. The apparatus according to claim 45, wherein the apparatus further comprises the memory.

47. The apparatus according to claim 45 or 46, wherein the apparatus further comprises a communication interface, and the communication interface is coupled to the processor; and
the communication interface is configured to input and/or output information.

48. The apparatus according to any one of claims 45 to 47, wherein the apparatus is a chip.

49. A computer-readable storage medium, wherein the computer-readable storage medium stores a computer program or instructions; and when the computer program or the instructions are run on a communication apparatus, the communication apparatus is enabled to perform the method according to any one of claims 1 to 42.

50. A communication system, comprising the communication apparatus according to claim 43 and the communication apparatus according to claim 44.

FIG. 1

Configuration type 1

Single symbol

Double symbols

Configuration type 2

Single symbol

Double symbols

(a)    (b)    (c)    (d)

CDM group 1={P2, P3}    CDM group 1={P2, P3, P6, P7}    CDM group 2={P4, P5}    CDM group 2={P4, P5, P10, P11}

CDM group 0={P0, P1}    CDM group 0={P0, P1, P4, P5}    CDM group 1={P2, P3}    CDM group 1={P2, P3, P8, P9}

CDM group 0={P0, P1}    CDM group 0={P0, P1, P6, P7}

FIG. 2

EP 4 637 204 A1

FIG. 3

FIG. 4

FIG. 5

Network device — Terminal device

S601: Indication information of a first resource

S602: Determine a first measurement result based on a third resource

S603: Receive first data on a second resource based on the first measurement result

FIG. 6

| OFDM #1 | OFDM | OFDM #2 | OFDM | OFDM #3 |

(a)

| OFDM #1 | OFDM | OFDM #2 | OFDM | OFDM | OFDM #3 |

(b)

FIG. 7

| Subcarrier/ OFDM symbol | 0 | 1 | 2 | 3 | 4 | 5 | 6 | 7 | 8 | 9 | 10 | 11 | 12 | 13 |
|---|---|---|---|---|---|---|---|---|---|---|---|---|---|---|
| 0 | PDCCH | PDCCH | DMRS | First resource | Data | Data | First resource | Data | Data | First resource | Data | Data | First resource | Data |
| 1 | PDCCH | PDCCH | DMRS | Data | Data | Data | Data | Data | Data | Data | Data | Data | Data | Data |
| 2 | PDCCH | PDCCH | DMRS | Data | Data | Data | Data | Data | Data | Data | Data | Data | Data | Data |
| 3 | PDCCH | PDCCH | DMRS | Data | Data | Data | Data | Data | Data | Data | Data | Data | Data | Data |
| 4 | PDCCH | PDCCH | DMRS | Data | Data | Data | Data | Data | Data | Data | Data | Data | Data | Data |
| 5 | PDCCH | PDCCH | DMRS | Data | Data | Data | Data | Data | Data | Data | Data | Data | Data | Data |
| 6 | PDCCH | PDCCH | DMRS | Data | Data | Data | Data | Data | Data | Data | Data | Data | Data | Data |
| 7 | PDCCH | PDCCH | DMRS | Data | Data | Data | Data | Data | Data | Data | Data | Data | Data | Data |
| 8 | PDCCH | PDCCH | DMRS | Data | Data | Data | Data | Data | Data | Data | Data | Data | Data | Data |
| 9 | PDCCH | PDCCH | DMRS | Data | Data | Data | Data | Data | Data | Data | Data | Data | Data | Data |
| 10 | PDCCH | PDCCH | DMRS | Data | Data | Data | Data | Data | Data | Data | Data | Data | Data | Data |
| 11 | PDCCH | PDCCH | DMRS | Data | Data | Data | Data | Data | Data | Data | Data | Data | Data | Data |

Legend: ■ PDCCH    ▨ DMRS    ░ Data    ▩ First resource

FIG. 8(a)

| Subcarrier/ OFDM symbol | 0 | 1 | 2 | 3 | 4 | 5 | 6 | 7 | 8 | 9 | 10 | 11 | 12 | 13 |
|---|---|---|---|---|---|---|---|---|---|---|---|---|---|---|
| 0 | PDCCH | PDCCH | DMRS | First resource | Data | Data | Data | Data | Data | Data | Data | Data | Data | Data |
| 1 | PDCCH | PDCCH | DMRS | Data | Data | Data | Data | Data | Data | Data | Data | Data | Data | Data |
| 2 | PDCCH | PDCCH | DMRS | Data | Data | Data | Data | Data | Data | Data | Data | Data | Data | Data |
| 3 | PDCCH | PDCCH | DMRS | Data | Data | Data | First resource | Data | Data | Data | Data | Data | Data | Data |
| 4 | PDCCH | PDCCH | DMRS | Data | Data | Data | Data | Data | Data | Data | Data | Data | Data | Data |
| 5 | PDCCH | PDCCH | DMRS | Data | Data | Data | Data | Data | Data | Data | Data | Data | Data | Data |
| 6 | PDCCH | PDCCH | DMRS | Data | Data | Data | Data | Data | Data | First resource | Data | Data | Data | Data |
| 7 | PDCCH | PDCCH | DMRS | Data | Data | Data | Data | Data | Data | Data | Data | Data | Data | Data |
| 8 | PDCCH | PDCCH | DMRS | Data | Data | Data | Data | Data | Data | Data | Data | Data | Data | Data |
| 9 | PDCCH | PDCCH | DMRS | Data | Data | Data | Data | Data | Data | Data | Data | Data | First resource | Data |
| 10 | PDCCH | PDCCH | DMRS | Data | Data | Data | Data | Data | Data | Data | Data | Data | Data | Data |
| 11 | PDCCH | PDCCH | DMRS | Data | Data | Data | Data | Data | Data | Data | Data | Data | Data | Data |

Legend: ■ PDCCH    ▨ DMRS    ░ Data    ▩ First resource

FIG. 8(b)

| Subcarrier/ OFDM symbol | 0 | 1 | 2 | 3 | 4 | 5 | 6 | 7 | 8 | 9 | 10 | 11 | 12 | 13 |
|---|---|---|---|---|---|---|---|---|---|---|---|---|---|---|
| 0 | | | | First resource | | | | | | | | | | |
| 1 | | | | | | | | | | | | | | |
| 2 | | | | | | | First resource | | | | | | | |
| 3 | | | | | | | | | | | | | | |
| 4 | | | | | | | | | | | | | | |
| 5 | | | | | | | | | | First resource | | | | |
| 6 | | | | | | | | | | | | | | |
| 7 | | | | | | | | | | | | | | |
| 8 | | | | | | | | | | | | | | |
| 9 | | | | | | | | | | | | | First resource | |
| 10 | | | | | | | | | | | | | | |
| 11 | | | | | | | | | | | | | | |

▰ PDCCH     ▨ DMRS     ▦ Data     ⊠ First resource

FIG. 8(c)

| Subcarrier/ OFDM symbol | 0 | 1 | 2 | 3 | 4 | 5 | 6 |
|---|---|---|---|---|---|---|---|
| 0 | | | | | | | |
| 1 | | | | | | | |
| 2 | | | | | | | |
| 3 | | | | | | | |
| 4 | | | | | | | |
| 5 | | | | | | | |
| 6 | | | | | | | |
| 7 | | | | | | | |
| 8 | | | | | | | |
| 9 | | | | | | | |
| 10 | | | | | | | |
| 11 | | | | | | | |

PDCCH    DMRS

Data    First resource

(a)

| Subcarrier/ OFDM symbol | 0 | 1 | 2 | 3 | 4 | 5 | 6 |
|---|---|---|---|---|---|---|---|
| 0 | | | | | | | |
| 1 | | | | | | | |
| 2 | | | | | | | |
| 3 | | | | | | | |
| 4 | | | | | | | |
| 5 | | | | | | | |
| 6 | | | | | | | |
| 7 | | | | | | | |
| 8 | | | | | | | |
| 9 | | | | | | | |
| 10 | | | | | | | |
| 11 | | | | | | | |

PDCCH    DMRS

Data    First resource

(b)

FIG. 9

| Subcarrier/ OFDM symbol | 0 | 1 | 2 | 3 | 4 | 5 | 6 | 7 | 8 | 9 | 10 | 11 | 12 | 13 |
|---|---|---|---|---|---|---|---|---|---|---|---|---|---|---|
| 0 | | | | | | | | | | | | | | |
| 1 | | | | | | | | | | | | | | |
| 2 | | | | | | | | | | | | | | |
| 3 | | | | | | | | | | | | | | |
| 4 | | | | | | | | | | | | | | |
| 5 | | | | | | | | | | | | | | |
| 6 | | | | | | | | | | | | | | |
| 7 | | | | | | | | | | | | | | |
| 8 | | | | | | | | | | | | | | |
| 9 | | | | | | | | | | | | | | |
| 10 | | | | | | | | | | | | | | |
| 11 | | | | | | | | | | | | | | |

PDCCH    DMRS    Data    First resource

(a)

| Subcarrier/ OFDM symbol | 0 | 1 | 2 | 3 | 4 | 5 | 6 | 7 | 8 | 9 | 10 | 11 | 12 | 13 |
|---|---|---|---|---|---|---|---|---|---|---|---|---|---|---|
| 0 | | | | | | | | | | | | | | |
| 1 | | | | | | | | | | | | | | |
| 2 | | | | | | | | | | | | | | |
| 3 | | | | | | | | | | | | | | |
| 4 | | | | | | | | | | | | | | |
| 5 | | | | | | | | | | | | | | |
| 6 | | | | | | | | | | | | | | |
| 7 | | | | | | | | | | | | | | |
| 8 | | | | | | | | | | | | | | |
| 9 | | | | | | | | | | | | | | |
| 10 | | | | | | | | | | | | | | |
| 11 | | | | | | | | | | | | | | |

PDCCH    DMRS    Data    First resource

(b)

FIG. 10

| Subcarrier/ OFDM symbol | 0 | 1 | 2 | 3 | 4 | 5 | 6 | 7 | 8 | 9 | 10 | 11 | 12 | 13 |
|---|---|---|---|---|---|---|---|---|---|---|---|---|---|---|
| 0 | | | | | | | | | | | | | | |
| 1 | | | | | | | | | | | | | | |
| 2 | | | | | | | | | | | | | | |
| 3 | | | | | | | | | | | | | | |
| 4 | | | | | | | | | | | | | | |
| 5 | | | | | | | | | | | | | | |
| 6 | | | | | | | | | | | | | | |
| 7 | | | | | | | | | | | | | | |
| 8 | | | | | | | | | | | | | | |
| 9 | | | | | | | | | | | | | | |
| 10 | | | | | | | | | | | | | | |
| 11 | | | | | | | | | | | | | | |

PDCCH    DMRS    Data    First resource

(a)

| Subcarrier/ OFDM symbol | 0 | 1 | 2 | 3 | 4 | 5 | 6 | 7 | 8 | 9 | 10 | 11 | 12 | 13 |
|---|---|---|---|---|---|---|---|---|---|---|---|---|---|---|
| 0 | | | | | | | | | | | | | | |
| 1 | | | | | | | | | | | | | | |
| 2 | | | | | | | | | | | | | | |
| 3 | | | | | | | | | | | | | | |
| 4 | | | | | | | | | | | | | | |
| 5 | | | | | | | | | | | | | | |
| 6 | | | | | | | | | | | | | | |
| 7 | | | | | | | | | | | | | | |
| 8 | | | | | | | | | | | | | | |
| 9 | | | | | | | | | | | | | | |
| 10 | | | | | | | | | | | | | | |
| 11 | | | | | | | | | | | | | | |

PDCCH    DMRS    Data    First resource

(b)

FIG. 11

| Subcarrier/ OFDM symbol | 0 | 1 | 2 | 3 | 4 | 5 | 6 | 7 | 8 | 9 | 10 | 11 | 12 | 13 |
|---|---|---|---|---|---|---|---|---|---|---|---|---|---|---|
| 0 | | | | | | | | | | | | | | |
| 1 | | | | | | | | | | | | | | |
| 2 | | | | | | | | | | | | | | |
| 3 | | | | | | | | | | | | | | |
| 4 | | | | | | | | | | | | | | |
| 5 | | | | | | | | | | | | | | |
| 6 | | | | | | | | | | | | | | |
| 7 | | | | | | | | | | | | | | |
| 8 | | | | | | | | | | | | | | |
| 9 | | | | | | | | | | | | | | |
| 10 | | | | | | | | | | | | | | |
| 11 | | | | | | | | | | | | | | |

■ PDCCH   ▨ DMRS   ▦ Data

⧄ First resource corresponding to a cell #1    ⊞ First resource corresponding to a cell #2    ▥ First resource corresponding to a cell #3

FIG. 12

| Subcarrier/ OFDM symbol | 0 | 1 | 2 | 3 | 4 | 5 | 6 | 7 | 8 | 9 | 10 | 11 | 12 | 13 |
|---|---|---|---|---|---|---|---|---|---|---|---|---|---|---|
| 0 | | | | | | | | | | | | | | |
| 1 | | | | | | | | | | | | | | |
| 2 | | | | | | | | | | | | | | |
| 3 | | | | | | | | | | | | | | |
| 4 | | | | | | | | | | | | | | |
| 5 | | | | | | | | | | | | | | |
| 6 | | | | | | | | | | | | | | |
| 7 | | | | | | | | | | | | | | |
| 8 | | | | | | | | | | | | | | |
| 9 | | | | | | | | | | | | | | |
| 10 | | | | | | | | | | | | | | |
| 11 | | | | | | | | | | | | | | |

■ PDCCH   ▨ DMRS   ▦ Data   ⧄ First resource

FIG. 13

Communication
apparatus 1400

Transceiver unit
1410

Processing unit
1420

Storage unit
1430

FIG. 14

Communication apparatus 1500

Processor
1510

Transceiver
1520

Memory
1530

FIG. 15

1600

Antenna

Radio frequency circuit

1610

Memory

Processor

1620

Input/Output apparatus

FIG. 16

1700

FIG. 17

## INTERNATIONAL SEARCH REPORT

| International application No. |
|---|
| **PCT/CN2023/141827** |

**A. CLASSIFICATION OF SUBJECT MATTER**

H04W 24/08(2009.01)i

According to International Patent Classification (IPC) or to both national classification and IPC

**B. FIELDS SEARCHED**

Minimum documentation searched (classification system followed by classification symbols)

IPC: H04W H04B

Documentation searched other than minimum documentation to the extent that such documents are included in the fields searched

Electronic data base consulted during the international search (name of data base and, where practicable, search terms used)

CNKI, CNTXT, ENTXT, ENTXTC, DWPI, 3GPP: 干扰, 测量, 指示, 解调参考信号, 数据, 符号, 差异, 差别, 区别, 零功率, 不传输, 打孔, interference, measurement, indication, DMRS, data, symbol, difference, zero power, ZP, not, transmit, puncture

**C. DOCUMENTS CONSIDERED TO BE RELEVANT**

| Category* | Citation of document, with indication, where appropriate, of the relevant passages | Relevant to claim No. |
|---|---|---|
| X | CN 112929100 A (VIVO COMMUNICATION TECHNOLOGY CO., LTD.) 08 June 2021 (2021-06-08)<br>  description, paragraphs 0027-0157, and figures 3-4 | 1-50 |
| X | QUALCOMM INCORPORATED. "R1-1718552, Discussion on Bursty Interference Measurement Resources"<br>*3GPP TSG RAN WG1 Meeting 90bis,* 13 October 2017 (2017-10-13),<br>  sections 1-2 | 1-50 |
| A | CN 110545164 A (HUAWEI TECHNOLOGIES CO., LTD.) 06 December 2019 (2019-12-06)<br>  entire document | 1-50 |
| A | US 2018054270 A1 (SAMSUNG ELECTRONICS CO., LTD.) 22 February 2018 (2018-02-22)<br>  entire document | 1-50 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **03 April 2024** | **10 April 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/141827**

| Patent document cited in search report | | | Publication date (day/month/year) | Patent family member(s) | | | Publication date (day/month/year) |
|---|---|---|---|---|---|---|---|
| CN | 112929100 | A | 08 June 2021 | WO | 2021109956 | A1 | 10 June 2021 |
| | | | | US | 2022286252 | A1 | 08 September 2022 |
| | | | | EP | 4060910 | A1 | 21 September 2022 |
| CN | 110545164 | A | 06 December 2019 | WO | 2019228076 | A1 | 05 December 2019 |
| US | 2018054270 | A1 | 22 February 2018 | KR | 20180020918 | A | 28 February 2018 |
| | | | | CN | 107769883 | A | 06 March 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211730786